(19) Europäisches Patentamt / European Patent Office / Office européen des brevets

(11) **EP 3 427 474 B1**

(12) **EUROPÄISCHE PATENTSCHRIFT**

(45) Veröffentlichungstag und Bekanntmachung des Hinweises auf die Patenterteilung:
**22.02.2023   Patentblatt 2023/08**

(21) Anmeldenummer: **17713589.4**

(22) Anmeldetag: **03.03.2017**

(51) Internationale Patentklassifikation (IPC):
**H04N 5/247** (2006.01)   **H04N 17/00** (2006.01)
**G06T 7/80** (2017.01)

(52) Gemeinsame Patentklassifikation (CPC):
**H04N 17/002; G06T 7/80; H04N 23/90**

(86) Internationale Anmeldenummer:
**PCT/EP2017/055044**

(87) Internationale Veröffentlichungsnummer:
**WO 2017/153284 (14.09.2017 Gazette 2017/37)**

(54) **BILDVERARBEITUNGSVERFAHREN, BILDVERARBEITUNGSMITTEL UND BILDVERARBEITUNGSVORRICHTUNG ZUR ERZEUGUNG VON ABBILDUNGEN EINES TEILS EINES DREIDIMENSIONALEN RAUMS**

IMAGE PROCESSING METHOD, IMAGE PROCESSING MEANS AND IMAGE PROCESSING DEVICE FOR GENERATING IMAGES OF A PORTION OF A THREE-DIMENSIONAL SPACE

PROCÉDÉ DE TRAITEMENT D'IMAGES, MOYEN DE TRAITEMENT D'IMAGES ET DISPOSITIF DE TRAITEMENT D'IMAGES POUR GÉNÉRER DES REPRODUCTIONS D'UNE PARTIE D'UN ESPACE TRIDIMENSIONNEL

(84) Benannte Vertragsstaaten:
**AL AT BE BG CH CY CZ DK EE ES FI FR GB GR HR HU IE IS IT LI LT LU LV MC MK MT NL NO PL PT RO RS SE SI SK SM TR**

(30) Priorität: **08.03.2016   DE 102016203709**

(43) Veröffentlichungstag der Anmeldung:
**16.01.2019   Patentblatt 2019/03**

(73) Patentinhaber: **Fraunhofer-Gesellschaft zur Förderung der angewandten Forschung e.V.
80686 München (DE)**

(72) Erfinder:
• SCHIEWE, Manuel
  **12105 Berlin (DE)**
• PEIKERT, Silvio
  **12527 Berlin (DE)**

(74) Vertreter: **Maikowski & Ninnemann Patentanwälte Partnerschaft mbB
Postfach 15 09 20
10671 Berlin (DE)**

(56) Entgegenhaltungen:
WO-A1-2007/082690     US-A1- 2003 234 866
US-A1- 2010 067 072     US-A1- 2012 002 057

• TSAI R Y ED - INSTITUTE OF ELECTRICAL AND ELECTRONICS ENGINEERS: "AN EFFICIENT AND ACCURATE CAMERA CALIBRATION TECHNIQUE FOR 3D MACHINE VISION", PROCEEDINGS OF THE CONFERENCE ON COMPUTER VISION AND PATTERN RECOGNITION. MIAMI BEACH, FLORIDA, JUNE 22 - 26, 1986; [PROCEEDINGS OF THE CONFERENCE ON COMPUTER VISION AND PATTERN RECOGNITION], WASHINGTON, IEEE COMP. SOC. PRESS, US, 1. Januar 1986 (1986-01-01), Seiten 364-374, XP001004843, in der Anmeldung erwähnt
• Sebastian Tilch: "CLIPS - Development of a Novel Camera and Laser-Based Indoor Positioning System", , 31. Dezember 2012 (2012-12-31), XP055374741, Gefunden im Internet: URL:http://e-collection.library.ethz.ch/es erv/eth:6438/eth-6438-02.pdf [gefunden am 2017-05-22] in der Anmeldung erwähnt

EP 3 427 474 B1

- **Tomas Svoboda ET AL: "A Software for Complete Calibration of Multicamera Systems Tomás Svoboda with contributions from", , 15. Februar 2005 (2005-02-15), XP055374746, Gefunden im Internet: URL:http://cmp.felk.cvut.cz/~svoboda/SelfC al/Publ/talk-print.pdf [gefunden am 2017-05-22] in der Anmeldung erwähnt**

**Beschreibung**

Die Erfindung betrifft ein Bildverarbeitungsverfahren zur Erzeugung von Abbildungen eines Teils eines dreidimensionalen Raums mit den Merkmalen des Anspruchs 1, Bildverarbeitungsmittel mit den Merkmalen der Ansprüche 13 oder 14 und eine Bildverarbeitungsvorrichtung zur Erzeugung von Abbildungen eines Teils eines dreidimensionalen Raums mit den Merkmalen des Anspruchs 15.

Um Abbildungen eines Teils eines dreidimensionalen Raums zu erzeugen, werden zum Beispiel Fisheye-Linsen verwendet. Mit ihnen ist es möglich, ein Sichtfeld mit einem Öffnungswinkel von 360° horizontal und 180° vertikal (Halbkugel) abzubilden. Die Auflösung dieser Abbildungen ist jedoch durch den Kamerachip des verwendeten Kamerasystems stark begrenzt. Eine Abbildung einer Vollkugel (Öffnungswinkel 360° horizontal und 360° vertikal) ist mit dieser Technik nicht möglich.

Es ist bekannt, Vollkugelabbildungen mit Hilfe sogenannter Video-Stitch-Programme, die einzelne Kamerabilder zusammenfügen, zu erstellen. Diese Programme arbeiten im Allgemeinen inhaltsbasiert, das heißt, der Nutzer oder das Computerprogramm suchen sich Stellen in den Randbereichen der Bilder, die das gleiche Objekt zeigen und setzen die Teilstücke auf Basis dieser Übereinstimmungen zusammen. Dieser Vorgang des Zusammenfügens dauert Minuten oder auch Stunden und ist damit für eine Wiedergabe der Abbildung im Wesentlichen in Echtzeit nicht geeignet. Insbesondere ist damit kein Live-Streaming möglich.

Ein System zur Abbildung eines dreidimensionalen Raums mit mehreren Kameravorrichtungen ist aus der veröffentlichten Patentanmeldung US 2010 / 0067072 A1 bekannt. Diese Veröffentlichung beschreibt eine Methode zur Kalibrierung eines Kamerasystems, dessen Sichtfelder zentral auf einen Punkt gerichtet sind. Dieses Kamerasystem dient vorrangig dem Erfassen von Printmedien und der Speicherung der Daten in digitaler Form. Da die Kameras während der Kalibrierung alle ein normiertes, flaches Feld erkennen müssen, kann mit diesem System nur ein Teil des dreidimensionalen Raums erfasst werden.

Bildverarbeitungsverfahren sind z.B. aus der Dissertation von S. Tilch "CLIPS - Development of a Novel Camera and Laser-Based Indoor Positioning System" ETH 20829 aus dem Jahr 2012 und dem Vortrag von Tomas Svoboda "A Software for Complete Calibration of Multicamera Systems" (http://cmp.felk.cvut.cz/~svoboda/SelfCal/Publ/talk-print.pdf abgerufen am 16. Februar 2016) bekannt. Ein weiteres System zur Kalibrierung von Kameras ist bekannt aus dem Dokument US2012/0002057 A1.

Es besteht daher die Aufgabe, verbesserte Bildverarbeitungsverfahren, Bildverarbeitungsmittel und Bildverarbeitungsvorrichtungen zu schaffen.

Diese Aufgabe wird durch ein Bildverarbeitungsverfahren mit den Merkmalen des Anspruchs 1 gelöst.

Das Verfahren verwendet dabei einen Kamera-Cluster mit mindestens zwei Kameravorrichtungen, die im dreidimensionalen Raum positioniert wird. Position und Blickrichtung jeder Kameravorrichtung sind prinzipiell beliebig. Die durch die weiter unten beschriebenen Kalibrierungsschritte gewonnenen Kalibrierparameterwerte der Kameravorrichtungen des Kamera-Clusters sind immer dann gültig, wenn Position und Blickrichtung der Kameravorrichtungen relativ zueinander gegenüber der Kalibrierung unverändert sind. D. h., auch wenn der gesamte Kamera-Cluster beispielsweise gedreht, geschwenkt oder versetzt wird, liefert die Verwendung der zuvor gewonnenen Kalibrierparameterwerte weiterhin das gewünschte Ergebnis.

Dabei wird jede Vorrichtung zur Erzeugung einer Abbildung als eine Kameravorrichtung betrachtet. Kameravorrichtungen können zum Beispiel Spiegelreflexkameras, Webcams, Videokameras, Action-Cams (z.B. Kameras an Helmen oder am Körper getragen), Brillen mit Kameras, Lichtfeldkameras, Kameras mit mehreren Bildsensoren und Linsen, oder Module für Handy-Kameras nutzen oder diese aufweisen. Die Gesamtheit der Kameravorrichtungen bildet dann den Kamera-Cluster. Durch die Verwendung von günstigen kleinen Kameravorrichtungen, wie Webcams oder Handy-Kameramodulen, sind kostengünstige Lösungen erreichbar.

Anschließend werden in einem ersten Kalibrierungsschritt alle Kameravorrichtungen im Kamera-Cluster einzeln kalibriert (Einzelkalibrierung). Dabei geht es um die Kalibrierung der Parameter, die die Aufnahmecharakteristika jeder einzelnen Kameravorrichtung beschreiben. Dies geschieht z.B. mit Hilfe des Kamerakalibrierungs-Verfahrens nach Tsai (An Efficient and Accurate Camera Calibration Technique for 3D Machine Vision, Proceedings of IEEE Conference on Computer Vision and Pattern Recognition 1986, Seiten 364-374, Miami Beach, XP001004843).

Grundsätzlich basiert die Kalibrierung jeder Kameravorrichtung auf einem mathematischen Modell zur Beschreibung der Kameraeigenschaften. Dies kann zum einen das Lochkamera-Modell sein, das sich durch innere (z.B. Öffnungswinkel) und äußere Parameter (Position und Orientierung) auszeichnet und auch beim Verfahren nach Tsai angewendet wird. Auch andere Modelle können verwendet werden, zum Beispiel das einer Fischaugen-Linse oder das einer Lookuptabelle, die für jeden n-ten Pixel seinen Abstrahlwinkel enthält.

Dabei nehmen die Kameravorrichtungen im dreidimensionalen Raum angeordnete Kalibriermarkierungen als Kalibrieraufnahmen auf, wobei die Positionen der Kalibriermarkierungen in einem dreidimensionalen Weltkoordinatensystem bekannt sein müssen, wodurch die Positionen der Kalibriermarkierungen in einem Koordinatensystem relativ zueinander bekannt sind.

Anschließend erfolgt eine Zuordnung der Kalibriermarkierungen zu einer vom Kamera-Cluster generierten mindestens einen Kalibrieraufnahme

Jede Kalibriermarkierung kann von keiner, einer oder mehreren Kameravorrichtungen aufgenommen werden. Da die relative Lage der Kalibriermarkierungen zueinander bekannt ist, ist es ausreichend, wenn jede Kameravorrichtung lediglich eine ausreichend große Teilmenge aller Kalibriermarkierungen erfasst; insbesondere muss keine Kalibriermarkierung von mehr als einer Kameravorrichtung erfasst werden. Eine ausreichend große Anzahl von Kalibriermarkierungen wurde von einer Kameravorrichtung erfasst, wenn sich eine ausreichende Anzahl (typischerweise 5 bis 15) der erfassten Kalibriermarkierungen anhand ihrer individuellen Eigenschaften (z. B. Farbe, Form) und/oder ihrer relativen Lage zueinander eindeutig entsprechenden Punkten (bzw. Bereichen) in den Aufnahmen der Kameravorrichtung zuordnen lassen.

Anhand der Aufnahme(n) werden die Aufnahmecharakteristika - die Werte innerer Parameter (z.B. Öffnungswinkel der Linse, Seitenverhältnis, leichte Abweichung vom Mittelpunkt und / oder Linsenkrümmung) und äußerer Parameter (z.B. Position und Orientierung im Raum) - jeder der Kameravorrichtungen berechnet. Der Algorithmus erhält als Eingabedaten die Positionen der Kalibriermarkierungen im dreidimensionalen Weltkoordinatensystem und pro Kameravorrichtung eine Reihe von Aufnahmen.

Zu Beginn werden die Koordinaten in den Kalibrierbildern der Kameravorrichtung 1, 2, 3, 4, 5 i Koordinaten in einem Weltkoordinatensystem zugeordnet. Zur Berechnung der Werte der Einzelkalibrierparameter wird pro Kameravorrichtung eine 3x3 Rotationsmatrix $R_i$, ein Translationsvektor $T_i$, eine Brennweite $F_i$ und ein Verzerrungskoeffizient $\kappa_i$ mit Hilfe von Modellgleichungen berechnet. Da alle Kameravorrichtungen im selben Weltkoordinatensystem kalibriert werden, sind dadurch ihre relativen Positionen und Orientierungen zueinander bekannt. Wird der Kamera-Cluster als Ganzes an einen anderen Ort und/oder in eine andere Orientierung gebracht, können die neue absolute Position und Orientierung aller Kameravorrichtungen bei Bedarf schnell anhand einer einzigen Referenzposition und -orientierung bestimmt werden.

Anschließend werden in einem zweiten Kalibrierungsschritt die Kameravorrichtungen des Kamera-Clusters zueinander kalibriert (d.h. es findet eine Gesamtkalibrierung und eine Bestimmung der Abbildungsvorschriften statt). Dazu werden anhand der mittels der vom Kamera-Cluster generierten mindestens einen Kalibrieraufnahme kameraspezifische Werte für eine Bildverzerrungskorrektur ("Warping"), eine Helligkeitskorrektur und / oder eine Farbkorrektur ("Blending") für mindestens eine Fokusfläche, insbesondere eine Fokusfläche mit vorbestimmten räumlichen Abständen zum Kamera-Cluster, berechnet. Die Fokusfläche kann z. B. aus Kalibrieraufnahmen am (ungefähren) Ort der Produktionsaufnahmen unter Zuhilfenahme von Abstandsmesseinrichtungen oder durch ortsunabhängig feste Abstände von Kamera-Cluster und Fokusfläche festgelegt und ihre absolute geografische Lage und/oder ihre relative Lage zum Kamera-Cluster kann gespeichert werden. Bei den Produktionsaufnahmen kann der Kamera-Cluster beweglich eingesetzt werden und muss sich insbesondere nicht mehr am Ort seiner Einzelkalibrierung befinden.

Die Fokusfläche ist dabei eine virtuelle Abbildungsfläche. Die Fokusfläche ist somit eine virtuelle Fläche im realen dreidimensionalen Raum, deren Inhalt ein späterer Betrachter scharf sehen soll.

Produktionsaufnahmen sind Aufnahmen des Kamera-Clusters, die - korrigiert und zusammengesetzt - präsentiert werden können. Sie müssen nicht am Ort und mit der Gesamtorientierung des Kamera-Clusters während der Einzelkalibrierungen aufgenommen werden, lediglich die Positionen und Orientierungen der Kameravorrichtungen zueinander müssen unverändert bleiben.

Die Kalibrierung der Kameravorrichtungen erfolgt somit nicht durch das Erkennen eines normierten, flachen Felds (siehe oben). Dadurch ist es möglich, die Kameravorrichtungen so zu positionieren, dass ein Teil des dreidimensionalen Raums mit einem Öffnungswinkel von bis zu 360° vertikal und bis zu 360° horizontal abgebildet werden kann.

So kann insbesondere eine Projektionsabbildung für mindestens eine Fokusfläche mit vorbestimmten räumlichen Abständen D zum Kamera-Cluster so berechnet werden, dass sich entsprechend den Werten der jeweiligen Einzel- und Gesamtkalibrierparameter korrigierte Bilder (gesamtkorrigierte Einzelbilder) der Kameravorrichtungen zu insbesondere homogenen, nahtlosen, versatzfreien und Schattenbild-freien Gesamtbildern zusammensetzen lassen. Die Bildverzerrungskorrektur ist hier eine Zuordnung der Pixel in dem Kamerabild zu Punkten im dreidimensionalen Raum.

Eine Projektionsabbildung für eine Fokusfläche kann insbesondere durch Anwendung der mittels des beanspruchten Verfahrens berechneten Einzel- und Gesamtkalibrierparameter auf von Kameravorrichtungen des kalibrierten Kamera-Clusters aufgenommene Bilder erzeugt werden.

Eine Projektionsabbildung kann eine reale Projektionsabbildung sein, wie sie beispielsweise im Bildspeicher einer Ausgabevorrichtung für eine reale Projektion aufgebaut oder dorthin übertragen wird (z. B. Bildspeicherinhalt eines Projektors oder eines Computermonitors). Es kann sich auch um eine abstrakte Projektionsabbildung handeln, die für einen generischen, insbesondere einen optisch idealen und zur Projektion von Bildern mit beliebiger Auflösung geeigneten, Projektor erstellt wird und bei Bedarf in eine reale Projektionsabbildung für einen oder mehrere Projektoren transformiert werden kann.

Auch wenn es Ziel des Verfahrens ist, Aufnahmen mindestens einer Kameravorrichtung zu nach Möglichkeit nahtlosen Gesamtbildern zusammenzusetzen, funktioniert das Verfahren auch, wenn sich die Aufnahmen der Kameravorrichtungen nicht zu nahtlosen Gesamtbildern zusammensetzen lassen, weil beispielsweise die räumlichen Blickwinkel der beteiligten Kameravorrichtungen weder überlappen noch aneinander angrenzen. In diesen Fällen weisen die entstehenden Gesamtbilder Lücken auf. Sie sind jedoch nach wie vor Versatz- und Schattenbild-frei.

Anschließend kann in einer Ausführungsform des Bildverarbeitungsverfahrens mittels einer Abbildungsvorschrift mindestens eine Aufnahme des Kamera-Clusters in eine Projektionsabbildung für mindestens eine Projektionsfläche umgewandelt werden, wobei die Projektionsabbildung aus korrigierten Aufnahmen der Kameravorrichtung zusammengefügt wird.

Der Kamera-Cluster kann nach der Einzelkalibrierung diese mindestens eine Aufnahme an einem beliebigen Ort, mit beliebiger Orientierung und zu einem beliebigen Zeitpunkt erzeugen. Insbesondere muss sich der Kamera-Cluster dabei nicht mehr am Ort und in der Orientierung seiner Einzelkalibrierung befinden.

Anschließend kann in einer Ausführungsform diese Projektionsabbildung von einer Ausgabevorrichtung in Echtzeit oder im Wesentlichen in Echtzeit präsentiert werden. Unter Echtzeit kann hier eine Wiedergabe verstanden werden, die vom Betrachter noch als solche wahrgenommen wird. Dabei bezieht sich die Echtzeit auf den zeitlichen Abstand der Aufnahme durch den Kamera-Cluster zur Wiedergabe der entsprechenden Produktionsabbildungen. So werden beim Streaming oder bei Live-Übertragungen über das Internet Verzögerungen bis zu einer 1 Minute in der Regel noch als Echtzeit toleriert.

Bei der Ausgabevorrichtung kann es sich insbesondere um einen Projektor-Cluster handeln. Zwischen den Kameravorrichtungen des Kamera-Clusters und dem Projektor-Cluster muss keine 1:1 Zuordnung bestehen. So kann ein Kamera-Cluster z.B. mehr oder weniger KameraVorrichtungen aufweisen, als es Projektoren gibt. Ein Projektor des Projektor-Clusters kann dabei Projektionsabbildungen projizieren, die auf der Basis von Aufnahmen einer oder mehrerer Kameravorrichtungen des Kamera-Clusters bestimmt wurden, wobei für unterschiedliche Pixel der Projektionsabbildungen die Aufnahmen unterschiedlicher Kameravorrichtungen die Basis bilden können. Ebenso können mehrere Projektoren Projektionsabbildungen projizieren, die auf der Basis von Aufnahmen einer teilweise oder vollständig gleichen Teilmenge der Kameravorrichtungen des Kamera-Clusters bestimmt wurden.

Das Zusammenfügen von Teilen einer Projektionsabbildung kann wiederum insbesondere homogen, nahtlos, versatz- und Schattenbild-frei erfolgen.

Eine im Wesentlichen in Echtzeit erfolgende Präsentation der Projektionsabbildung ermöglicht zahlreiche Anwendungen, z.B. Live-Streamings eines Umgebungsbildes in einer Kuppel, die mit der bisherigen Technik, wie zum Beispiel Video-Stitching-Programmen, nicht möglich sind, da diese eine zeitintensive, bildweise individuelle Offline-Bearbeitung der Aufnahmen der Kameravorrichtungen erfordert.

Die Kameravorrichtungen werden an eine Datenverarbeitungsvorrichtung angeschlossen, sodass eine Software aktuell aufgenommene Bilder umgehend verarbeiten kann.

Bei diesem Verfahren werden die von den Kameravorrichtungen aufgenommenen Bilder geometriebasiert und nicht inhaltsbasiert, wie bei Video-Stitch-Programmen, zu einer Projektionsabbildung zusammengefügt. Geometriebasiert bedeutet, dass die Parameter für das Zusammenfügen nicht aus dem Inhalt der von den Kameravorrichtungen aufgenommenen Bilder bestimmt werden. Stattdessen werden für jede Kameravorrichtung des Kamera-Clusters vorab bestimmte Korrekturwerte genutzt, die sich beispielsweise aus deren Aufnahmecharakteristika, Position und Blickrichtung ableiten lassen. Hierfür müssen diese Korrekturwerte kalibriert werden.

In einer Ausführungsform wird statt oder neben einer Projektionsabbildung unter Anwendung der gewonnenen Bildverzerrungs-, Helligkeits- und/oder Farbkorrekturparameterwerte ein homogenes, nahtloses, Versatz- und Schattenbild-freies Gesamtbild erzeugt, das abgespeichert und/oder, insbesondere zu einer Projektionsabbildung, weiterverarbeitet werden kann.

In einer Ausführungsform ist mindestens eine Kameravorrichtung fest mit einer räumlich bekannten Lage angeordnet und / oder mindestens eine Kameravorrichtung wird entlang einer räumlich bekannten Bahn mit einer bekannten Bewegungsgröße bewegt. In beiden Varianten und auch in der Kombination sind die Positionen der Kameravorrichtungen im Weltkoordinatensystem bekannt, so dass die Kalibrierung in einfacher Weise erfolgen kann.

Die Fokusfläche kann eine komplexe Flächenform aufweisen, wobei es jeweils wichtig ist, dass bei der Festlegung der Fokusfläche deren räumlicher Abstand zum Kamera-Cluster mit ausreichender Granularität bekannt ist. Beispiele:

1) Es werden Schauspieler gefilmt, die sich alle etwa zwei Meter rund um den Kamera-Cluster aufhalten und bewegen. Dann wird als Fokusfläche eine Kugel gewählt mit dem Radius D = 2 m, damit in diesem Abstand das Bild optimal zusammengesetzt wird.

2) Der Kamera-Cluster filmt in der Südrichtung einige Schauspieler, die in zwei Meter Entfernung sind. In der Nordrichtung befinden sich einige Bäume in vier Metern Entfernung. Als Fokusfläche wird eine Hülle gewählt, die in Nordrichtung D = 2 m und in Südrichtung D = 4 m misst. Im Osten und Westen ergeben sich daraus Werte zwischen zwei und vier Metern, im Mittel etwa drei Meter.

Auch ist es möglich, dass die mindestens eine Fokusfläche mindestens zum Teil durch eine Laserabtastung, eine Time-of-Flight-Abstandsmessung, eine bildbasierte Erkennung eines Fokusobjektes (z. B. eines bestimmten Schauspielers, eines relevanten Tieres oder Gebäudes), stereometrische optische Mustererkennung und / oder durch Abstandsmessungen benachbarter, überlappender Kameravorrichtungen bestimmt wird, wobei zwei Kameravorrichtungen mit bekannten Parametern eine Stereo-Kamera bilden, mit der eine Geometrie rekonstruierbar ist. So kann die Parametrierung des Verfahrens, insbesondere die verwendete Fokusfläche, während der Aufnahme oder der Präsentation an die Aufnahmeinhalte angepasst werden, sodass Qualitätsmerkmale zusammengesetzter Aufnahmen, insbesondere die Vermeidung von Schattenbildern und Versätzen, optimiert werden, während qualitative Eigenschaften des Verfahrens, insbesondere die echtzeitfähige Realisierbarkeit, erhalten bleiben.

In einer Ausführungsform kann die Abbildungsvorschrift und/oder die Abbildung zur Präsentation der Kameraaufnahmen in Echtzeit oder im Wesentlichen Echtzeit, d.h. bezogen auf den Aufnahmezeitpunkt der zu präsentierenden Aufnahmen des Kameraclusters ermittelt werden. Dies ermöglicht insbesondere die dynamische Wahl der Größe und Form der Fokusfläche. Dabei gelten für die Definition der Echtzeit die Zeiträume, die auch im Zusammenhang mit der Projektion benannt wurden.

Die Gewinnung einer Abbildungsvorschrift für eine Kameravorrichtung bezüglich einer Fokus- und einer Projektionsfläche wird im Zusammenhang mit der Figurenbeschreibung beispielhaft erläutert.

Eine Abbildungsvorschrift stellt einen eindeutigen Zusammenhang zwischen den Aufnahmen des Kamera-Clusters und der Projektionsabbildung her. Dies kann z. B. durch einen funktionalen Zusammenhang, Tabellen und / oder Gitternetze geschehen. So können die Zuordnungen zwischen Fokusfläche und Projektionsfläche als Tabelle gespeichert werden.

Mindestens zwei Kameravorrichtungen können gemäß einer Ausführungsform so im Raum positioniert werden, dass sich die räumlichen Blickwinkel von mindestens zwei der Kameravorrichtungen wenigstens teilweise überlappen.

Damit steht es dem Anwender frei, die mindestens zwei Kameravorrichtungen zentral zu positionieren, so dass deren räumliche Blickwinkel nach außen gerichtet sind oder alle Kameravorrichtungen so zu positionieren, dass ihre räumlichen Blickwinkel auf einen Punkt innerhalb des dreidimensionalen Raumes zwischen den mindestens zwei Kameravorrichtungen gerichtet sind. Für eine zylindrische Rundumsicht können die Kameravorrichtungen z.B. in einem Kreis angeordnet sein. Damit kann z.B. eine Panoramaansicht erzeugt werden. Werden Kameravorrichtungen auch nach oben und unten gerichtet, erhält man eine vollständige Sicht rund um den Kamera-Cluster in Form einer Vollkugel.

Als räumlicher Blickwinkel einer Kameravorrichtung wird hier der Anteil im dreidimensionalen Raum bezeichnet, der von der jeweiligen Kameravorrichtung erfasst wird und damit abgebildet werden kann.

In einer Ausführungsform werden die Kalibriermarkierungen durch ein Lasersystem, insbesondere mit genau einem bewegten Laser, projiziert und / oder Kalibriermarkierungen im dreidimensionalen Raum sind sichtbare Gegenstände und / oder geometrische Strukturen.

Das Lasersystem lässt sich preisgünstig gestalten, indem nur jeweils eine Kalibriermarkierung projiziert und von einer oder mehreren der Kameravorrichtungen aufgenommen wird. Die Berechnung der Einzelkalibrierparameterwerte einer Kameravorrichtung erfolgt dann jeweils anhand der von der Kameravorrichtung aufgenommenen Kalibrieraufnahmen.

Ferner ist es möglich, dass die Bildverzerrungskorrektur, die Helligkeitskorrektur und / oder die Farbkorrektur für die Fokusfläche berechnet wird, indem jedem Pixel in den Aufnahmen des Kamera-Clusters ein Punkt im dreidimensionalen Raum in einer vorbestimmten Entfernung zum Kamera-Cluster zugeordnet wird.

So ist es auch möglich, die Bildverzerrungs-, Helligkeits- und/oder Farbkorrektur für eine virtuelle Kugel als Fokusfläche mit dem Radius D um den Kamera-Cluster zu berechnen. Die Berechnung der Bildverzerrungs-, Helligkeits- und/oder Farbkorrektur kann auch für an unterschiedlichen Punkten der Fokusfläche verschiedene vorbestimmte Entfernungen zum Kamera-Cluster erfolgen. Dadurch ist es z. B. möglich, für das Zusammenfügen der Abbildungen von mindestens zwei Kameravorrichtungen die für den Bildinhalt optimale Entfernung für die Bildverzerrungs-, Helligkeits- und/oder Farbkorrektur zu wählen, sodass eine optimale Abbildung eines Teils des dreidimensionalen Raums entsteht.

In einer weiteren Ausführungsform werden die Bildverzerrungs-, Helligkeits- und/oder Farbkorrekturwerte für eine erste Fokusfläche, insbesondere eine erste Kugel, und eine zweite Fokusfläche, insbesondere eine zweite Kugel, berechnet und während einer Darstellung wird jeweils zwischen der ersten und zweiten Fokusfläche umgeschaltet, je nachdem, in welchem Abstand sich ausgewählte Objekte befinden.

Dies ermöglicht folgendes Beispiel: Man hat den Kamera-Cluster auf die Entfernungskugeln D1 = 1 Meter, D2 = 2 Meter und D3 = 3 Meter kalibriert. Werden jetzt Objekte betrachtet oder gefilmt, die etwa einen Meter vom Kamera-Cluster entfernt sind, wird auf den Kalibrierdatensatz D1 geschaltet, damit die Objekte in den Überlappbereichen der Kamerabilder möglichst artefaktfrei zusammengesetzt werden. Will man später andere Objekte betrachten, die sich in etwa drei Metern Entfernung zum Kamera-Cluster befinden, so schaltet man um auf Datensatz D3.

Dabei können in einer Ausführungsform die Bildverzerrungs-, Helligkeits- und/oder Farbkorrekturwerte für erste Fokusfläche, insbesondere die erste Kugel, und die zweite Fokusfläche, insbesondere die zweite Kugel, berechnet werden und während einer Darstellung jeweils eine Interpolation zwischen den Werten für die erste und die zweite Fokusfläche vorgenommen werden, um eine optimale Darstellung von Objekten zu erzielen, die sich zwischen der ersten und der zweiten Fokusfläche befinden.

Dies kann an folgendem Beispiel gezeigt werden:

Wieder hat man den Kamera-Cluster auf die Entfernungskugeln D1 = 1 Meter, D2 = 2 Meter und D3 = 3 Meter kalibriert. Die zu betrachtenden Objekte sind jetzt aber etwa 2,40m zum Kamera-Cluster entfernt. Wählt man D2 oder D3, so würde man Doppelbilder auf den Objekten sehen. Durch die Interpolation kann man aber einen Datensatz D2.4 = 2,40m aus den Datensätzen D2 und D3 gewinnen, der für eine im Wesentlichen artefaktfreie Darstellung sorgt.

Ferner ist es möglich, dass um die Bildverzerrung, die Helligkeit und / oder den Farbwert korrigierte überlappende Aufnahmen des Kamera-Clusters teilweise so abgedunkelt werden und als reale Projektion auf eine Fläche projiziert werden und / oder in Form von Projektionsabbildungen abgespeichert werden, dass eine homogene, nahtlose Abbildung eines Teils des dreidimensionalen Raums entsteht.

Dies kann z.B. mit Hilfe von Blendbildern durchgeführt werden. Blendbilder sind nach dem Verfahren des "Soft-edge Blending" berechnete Bilder, die die Aufnahmen der jeweiligen Kameravorrichtung (teilweise) abdunkeln. Im Vergleich zu einem Verfahren ohne Helligkeits- und/oder Farbkorrektur erhöht die Helligkeits- und/oder Farbkorrektur der Aufnahmen die visuelle Qualität (Homogenität) der nahtlos zusammengefügten Projektionsabbildung.

In einer weiteren Ausführungsform werden die um die Bildverzerrung, die Helligkeit und / oder die Farbwerte korrigierten Aufnahmen des Kamera-Clusters auf die Oberfläche einer Kugel oder eines Teiles einer Kugel oder auf beliebig geformte, einen dreidimensionalen Raum begrenzende Flächen projiziert, so dass eine nahtlose Abbildung eines Teils des dreidimensionalen Raums entsteht.

In einer Ausführungsform werden die um die Bildverzerrung, die Helligkeit und / oder die Farbwerte korrigierten Aufnahmen des Kamera-Clusters auf eine CubeMap abgebildet, um sie in einem weiteren Verarbeitungsschritt oder später speichern und/oder projizieren zu können. Die CubeMaps sind Grafikmodule, die die Darstellung von Computergrafiken ermöglichen.

In einer Ausführungsform ist die nahtlose Projektionsabbildung eines Teils des dreidimensionalen Raums eine Rundumsicht bis 360° horizontal und 360° vertikal. Dadurch lassen sich z. B. Surround-Filme herstellen oder auch Panoramen oder Kuppelfilme bis hin zu die gesamte Umgebung abdeckenden "Vollkugel"-Filmen. Je nach Anzahl der Kameravorrichtungen kann ein Vielfaches der Auflösung von z. B. Fisheye-Kameras erreicht werden, was zu einer deutlich höheren Bildschärfe führt.

Die Perspektive der Projektionsabbildung eines Teils eines dreidimensionalen Raums ist grundsätzlich frei wählbar und nicht durch die Position der Kameravorrichtungen im Kamera-Cluster eingeschränkt. Es können mit Hilfe der Bilddaten stereoskopische Darstellungen erzeugt werden. Durch die dreidimensionalen Umgebungsdaten wird der Einsatz von Verfahren zur Objekterkennung und Objektsegmentierung ermöglicht, wodurch sich vielfältige Möglichkeiten zur automatisierten Bearbeitung von Abbildungen eröffnen. Durch die stereoskopische Abbildung kann die Form der Fokusfläche anhand der Bildinhalte bestimmt werden; dadurch lassen sich Ghostingeffekte vermeiden. Ghostingeffekte sind Doppelbilder im Überlappbereich zweier oder mehrerer Kameras. Diese entstehen, wenn die überlappenden Teilbilder nicht genau zueinanderpassen, ein dargestelltes Objekt ist dann teilweise doppelt zu sehen, obwohl es nur einmal da ist.

Es ist ferner möglich, dass die Ausgabevorrichtung die Ausgabe der Abbildungen auf unterschiedliche Arten bewerkstelligt. So kann die Ausgabevorrichtung die Projektion auf eine gekrümmte, komplex geformte oder eine ebene Fläche vornehmen und / oder die Ausgabevorrichtung die Abbildung (z.B. enthaltend gesamtkorrigierte Einzelbilder, Gesamtbilder, Abbildungen auf eine CubeMap und/oder Projektionsabbildungen) in eine Datei schreiben, oder auf einem Monitor oder in einer VR-Brille / Headmounted Display, oder auf einem Tablet / Handy darstellen, oder per Datenübertragung insbesondere kabellos oder kabelgebunden an einen anderen Ort streamen. Eine Datei kann dann in Form eines Bildes oder eines Videos zeitverzögert angezeigt werden.

In einer Ausführungsform ordnet die Bildverzerrungskorrektur den Bildpunkten der Projektionsabbildung neben den Bildpunkten der Aufnahmen des Kamera-Clusters auch den Abstand zwischen einem Betrachtungspunkt und einer, insbesondere einer Fokusfläche als Tiefenwert zu.

In einer weiteren Ausführungsform erfolgt die Kalibrierung der Parameter, die die Aufnahmecharakteristika der Kameravorrichtung beschreiben unter Verwendung eines Lochkamera-Modells, dem Modell der Fischaugen-Linse oder mittels einer Lookuptabelle, die für jeden n-ten Pixel ihren Abstrahlwinkel enthält.

Der Kamera-Cluster kann an einem Vehikel, insbesondere einem Flugzeug, einem Hubschrauber, einem insbesondere ferngesteuerten Tauchfahrzeug, einer Eisenbahn, einem Fahrrad, oder einer Drohne befestigt sein und dessen Umgebungssicht aufnehmen.

In einer weiteren Ausgestaltung wird die Relation zwischen der Fokusfläche, und dem Koordinatensystem mindestens einer weiteren Quelle räumlicher Daten bestimmt, so dass die Aufnahmen des Kamera-Clusters mit den Darstellungen der weiteren Datenquellen überlagert werden können, wobei optional Tiefenwerte zur Verdeckungsbehandlung genutzt werden.

Die Aufgabe wird auch durch Bearbeitungsmittel mit den Merkmalen der Ansprüche 13 und 14, sowie einer Vorrichtung mit den Merkmalen des Anspruchs 15 gelöst.

Die Erfindung wird nachfolgend anhand von Abbildungen und Ausführungsbeispielen näher erläutert. Es zeigen:

Fig. 1 den Aufbau einer Ausführungsform einer Vorrichtung zur Erzeugung einer Abbildung eines Teils eines dreidimensionalen Raums mit zwei Kameravorrichtungen;

Fig. 2A den Aufbau einer Ausführungsform einer Vorrichtung zur Erzeugung einer Abbildung eines Teils eines dreidimensionalen Raums mit fünf Kameravorrichtungen, die nach außen gerichtet sind;

Fig. 2B den beispielhaften Aufbau eines Systems mit drei Kameravorrichtungen, die nach innen gerichtet sind;

Fig. 3A die Projektion von Kalibriermarkierungen im dreidimensionalen Raum mit einem Lasersystem;

Fig. 3B eine Darstellung der Erfassung der Kalibriermarkierungen mit Hilfe einer Software;

Fig. 4 Blendbilder einer ersten Kameravorrichtung und einer zweiten Kameravorrichtung in dem Bereich, in dem die beiden Bilder für eine nahtlose Abbildung miteinander überlappen sollen;

Fig. 5 schematische Darstellung der Fokusfläche und der Projektionsfläche;

Fig. 6 ein Ablaufplan einer Ausführungsform des Verfahrens;

Fig. 7 eine Ausführungsform mit zwei halbkugelförmigen Fokusflächen;

Fig. 8 eine Darstellung eines Modellaufbaus einer Vorrichtung;

Fig. 9 eine Darstellung von drei Kameraansichten auf einer Projektionsfläche.

Fig. 10 eine Darstellung der Vermeidung von Ghosting als Effekt für die Wahl einer Fokusfläche

Im Folgenden werden unterschiedliche Anwendungen und Ausführungsformen von Bildverarbeitungsverfahren, Bildverarbeitungsmitteln und Bildverarbeitungsvorrichtungen beschrieben, wobei der Begriff "Bild" hier stehende und bewegte Bilder umfasst.

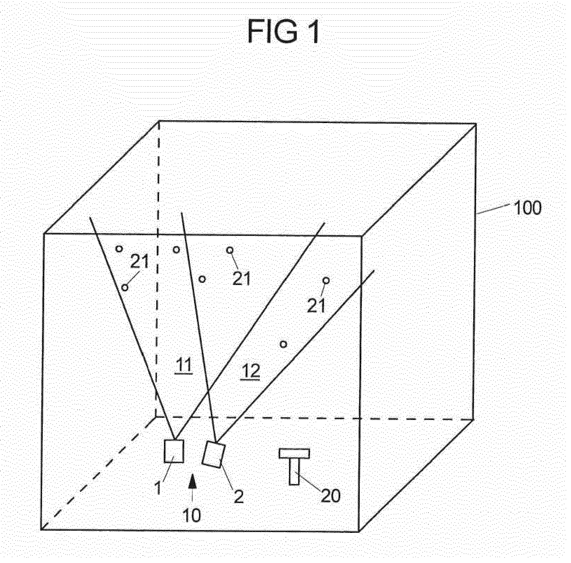

Für die Erzeugung einer Projektion, hier insbesondere einer nahtlosen Projektion eines Teils eines dreidimensionalen Raums 100, wird, wie in Fig. 1 dargestellt, exemplarisch ein System mit zwei Kameravorrichtungen 1, 2 verwendet.

Die Kameravorrichtungen 1, 2 bilden einen Kamera-Cluster 10.

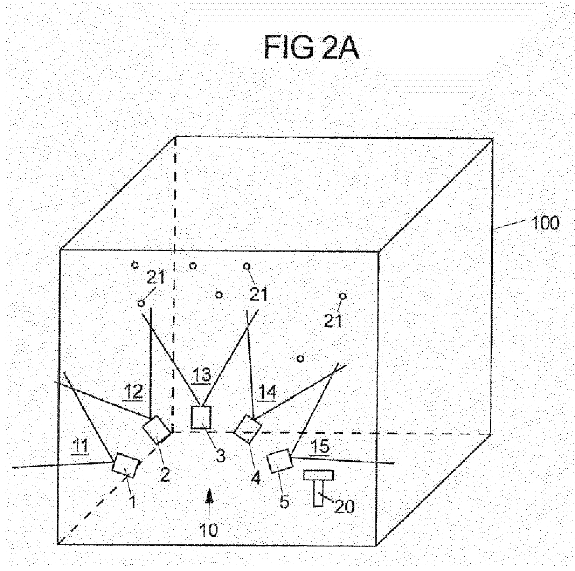

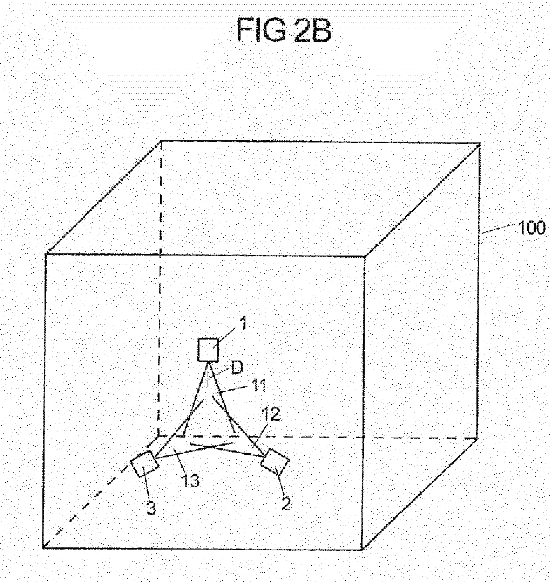

In anderen Ausführungsformen können auch mehr als zwei Kameravorrichtungen 1, 2 im Kamera-Cluster 10 verwendet werden (siehe Fig. 2A, 2B; analoge Darstellung zu Fig. 1). Auch eine Ausführungsform mit einer einzigen Kameravorrichtung ist möglich.

Die zwei Kameravorrichtungen 1, 2, die in der Ausführungsform der Fig. 1 dargestellt sind, sind relativ nah beieinander angeordnet, wobei deren räumliche Blickwinkel 11, 12 nach außen gerichtet sind und sich teilweise überlappen. In alternativen Ausführungsformen (siehe Fig. 2B) sind die Kameravorrichtungen 1, 2, 3 nach innen, d.h. auf einander zu orientiert ausgerichtet.

Im Folgenden wird eine Einzelkalibrierung der einzelnen Kameravorrichtungen 1, 2 näher beschrieben, wobei die Aufnahmecharakteristika der Kameravorrichtungen 1, 2 ermittelt werden.

Kalibriermarkierungen 21, die zum Beispiel von einem Lasersystem 20 auf eine Fläche im dreidimensionalen Raum 100 projiziert werden, werden von den Kameravorrichtungen 1, 2 erfasst. Es ist insbesondere möglich, eine Reihe von Kalibriermarkierungen 21 mit einem Lasersystem 20 mit beweglichem Laser zu erzeugen und jeweils einzeln mit den Kameravorrichtungen 1, 2 aufzunehmen.

Grundsätzlich können die Kalibriermarkierungen 21 aber auch von anderen Objekten gebildet sein, die von den Kameravorrichtungen 1, 2 erkannt werden können. So können z.B. Kanten von Gegenständen (Türränder, Tischkanten etc.) oder auch leuchtende Objekte (z.B. LEDs) als Kalibriermarkierungen 21 verwendet werden. Auch können Kalibriermarkierungen 21 unterschiedlicher Art gemeinsam bei der Erzeugung der Kalibrieraufnahmen verwendet werden.

Mit Hilfe der Kalibriermarkierungen 21 werden die Parameter berechnet, die die Aufnahmecharakteristika jeder einzelnen der Kameravorrichtungen 1, 2 beschreiben. Dies kann z.B. durch das an sich bekannte Verfahren von R. Tsai (An Efficient and Accurate Camera Calibration Technique for 3D Machine Vision, Proceedings of IEEE Conference on Computer Vision and Pattern Recognition 1986, Seiten 364-374, Miami Beach), für jede Kameravorrichtung 1, 2 einzeln erfolgen.

Damit werden innere Parameter (z.B. Öffnungswinkel der Linse, Seitenverhältnis, leichte Abweichung vom Mittelpunkt und / oder Linsenkrümmung) und äußere Parameter (z.B. Position und Orientierung jeder einzelnen der Kameravorrichtungen 1, 2 im Raum) berechnet. Der Algorithmus erhält pro Kameravorrichtung 1, 2 als Eingabedaten eine Reihe von Aufnahmen der jeweiligen Kameravorrichtung 1, 2, 3, 4, 5 von Kalibriermarkierungen 21, deren Positionen im dreidimensionalen Raum des Weltkoordinatensystems bekannt sein müssen. Da sie im selben Weltkoordinatensystem kalibriert werden, sind dadurch die relativen Positionen und Orientierungen der Kameravorrichtungen 1, 2 zueinander bekannt.

Statt des Kameramodells von Tsai, das eine relativ kleine Parameterzahl von inneren und äußeren Parametern aufweist, kann auch ein Kameramodell verwendet werden, das die Abstrahlwinkel 11, 12 für jeden einzelnen Pixel berechnet, oder zumindest jeden vierten oder achten.

Aufgrund der automatisierten ersten Kalibrierung ist dies ohne Aufwand für den Nutzer technisch möglich, es erhöht nur die Dauer des Kalibrierungsvorgangs. Der Vorteil ist eine erhöhte Genauigkeit.

Die hier beschriebene Ausführungsform verwendet für die Kamerakalibrierung Kalibrierungsmarkierungen 21. Das sind z. B. Punkte (z. B. auf Wänden oder der Projektionsfläche 42), deren Positionen im dreidimensionalen Raum 100 bekannt sind und die sich in den Abbildungen der Kameravorrichtungen 1, 2, wiederfinden lassen. Solche Kalibrierungsmarkierungen 21 lassen sich z. B. mit einem Laser-Markierer erzeugen. Dieses Gerät projiziert einen roten Punkt auf eine Fläche und kann aufgrund seiner Strahlwinkel und einer Distanzmessung diesen Punkt im Raum vermessen.

Die Kalibrierung jeder Kameravorrichtung 1, 2 läuft in einer Ausführungsform folgendermaßen ab:

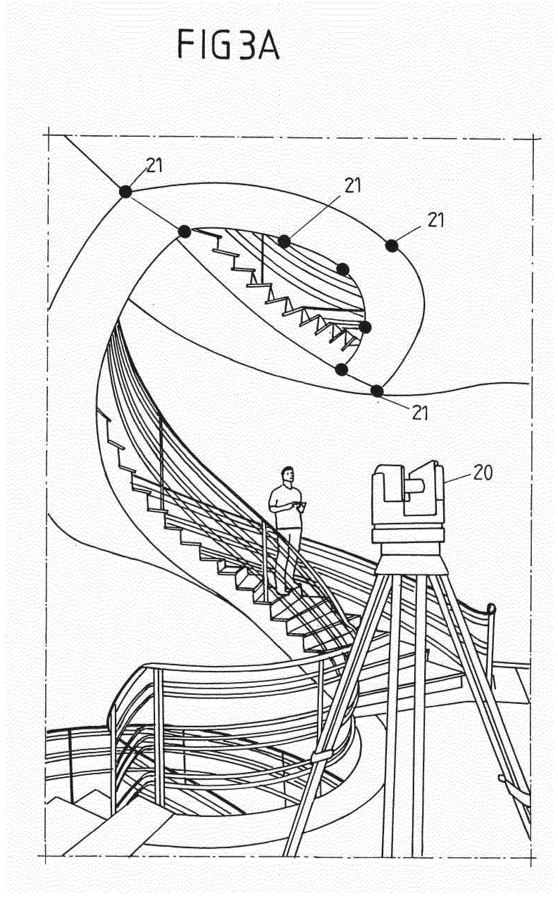

1. Ein Lasermarkierer projiziert einzelne Kalibriermarkierungen 21 in Rot auf einen Untergrund, z. B. eine Wand eines Innenraums, wie in Fig. 3A dargestellt.

2. Die Kameravorrichtungen 1, 2, nehmen jeweils Abbildungen der einzelnen Kalibriermarkierungen 21 auf (Kalibrieraufnahme).

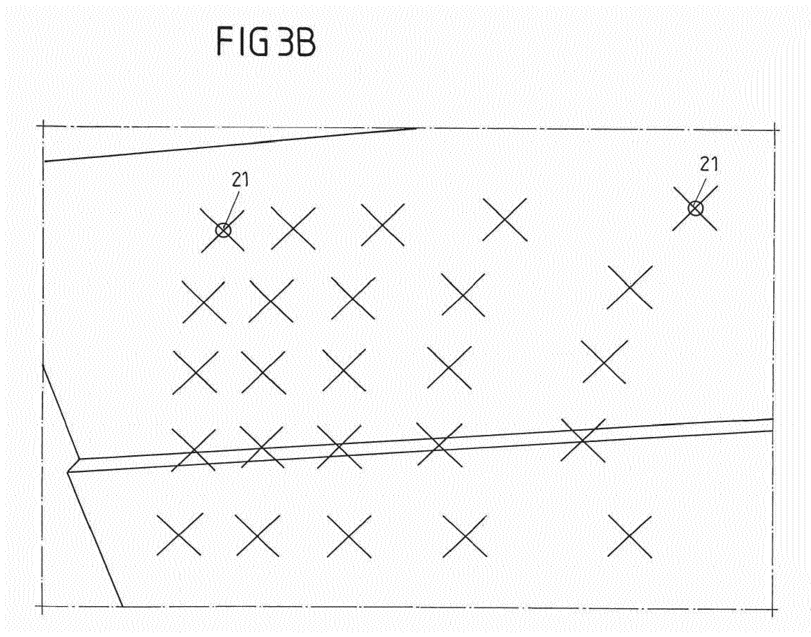

3. Eine Software erkennt die Kalibriermarkierungen 21 in den Kalibrieraufnahmen (siehe Fig. 3B). Hierbei werden durch Bildfilterungsalgorithmen die roten Punkte vom Hintergrund separiert und ihre Mittelpunkte in zweidimensionalen Koordinaten (in Pixeln) ermittelt. Dies geschieht mit den folgenden Schritten:

a) Ein Schwarzbild wird von der Kalibrieraufnahme abgezogen, um störende Lichtquellen zu eliminieren.

b) Die Kalibrieraufnahmen werden nach Grau konvertiert, da die folgenden Schritte auf Grauwertstufen basieren. Bei dieser Konvertierung wird der Rot-Kanal stark bevorzugt, da der Laser des Laserprojektors rot ist

c) Die Kalibrieraufnahme wird binarisiert, d.h. es gibt dann nur noch Schwarz (der Hintergrund) und Weiß (die Kalibriermarkierungen 21). Hierbei wird anhand eines Schwellwerts entschieden, welche Bereiche schwarz und welche weiß werden sollen. Die Helligkeiten der Pixel gehen üblicherweise von 0 (Schwarz) bis 255 (Weiß), und als Schwellwert kann man 127 wählen. Jeder Pixel des Bildes wird dann anhand seines Wertes nach dem Vergleich mit dem Schwellwert auf 0 oder 255 gesetzt.

d) Die weißen Bereiche werden mit Hilfe eines Blob Detection Algorithmus identifiziert. Hierbei wird das Bild Pixel für Pixel durchsucht. Schwarze Pixel zählen als Hintergrund und werden ignoriert. Wird ein weißes Pixel gefunden, werden alle anliegenden weißen Pixel hinzugenommen, und das Ganze als "Blob" gespeichert. Die Suche wird fortgeführt, bis alle Blobs gefunden sind. Jeder Blob entspricht einer gefundenen Kalibriermarkierung. Ihre Mittelpunkte in den x,y-Koordinaten werden als Position der Kalibriermarkierungen 21 im Kamerabildraum ermittelt.

4. Anhand der Zuordnung der Kalibriermarkierungen im dreidimensionalen Raum ($X_nY_nZ_n$) und im Kamera-Bild (Kalibrieraufnahme)($X_mY_m$) können alle geometrischen internen und externen Eigenschaften der Kameravorrichtungen 1, 2 berechnet werden, wenn genügend Kalibriermarkierungen 21 vorhanden sind. Hierbei wird das Verfahren von Tsai verwendet. Diese Zuordnung ist trivial, wenn man nacheinander genau je eine Kalibriermarkierung projiziert, diese fotografiert, und dieses Pärchen (ein $X_nY_nZ_n$ mit dem dazugehörigen $X_mY_m$) abspeichert, um später alle Pärchen an den Tsai-Algorithmus zu übergeben.

Wie oben ausgeführt, gibt es auch alternative Verfahren zum Tsai-Algorithmus.

Nach dem ersten Kalibrierungsschritt zur Kalibrierung der einzelnen Kameravorrichtungen 1, 2, wird in einem zweiten Kalibrierungsschritt der Kamera-Cluster 10 als Ganzes auf eine Fokusfläche 16 mit bestimmten Entfernungen D zum Kamera-Cluster kalibriert.

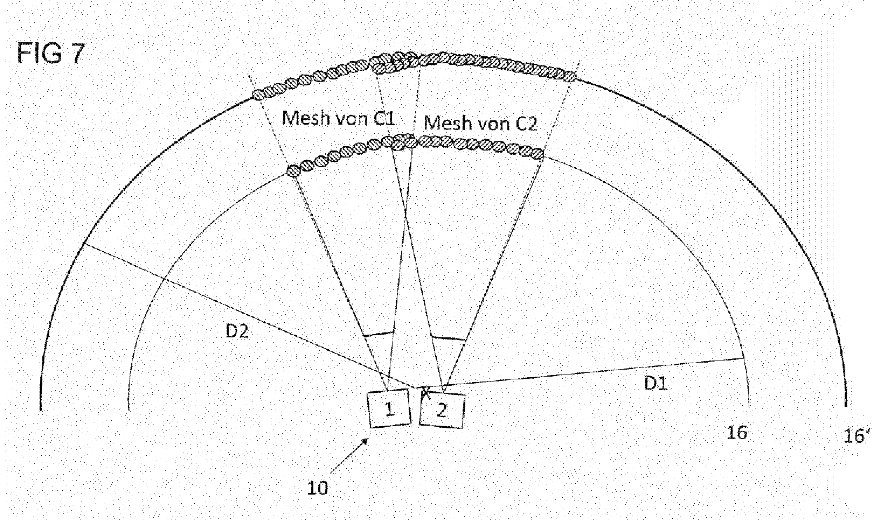

Im vorliegenden Beispiel wird eine kugelförmige Fokusfläche 16 mit einem wählbaren Radius D um den Kamera-Cluster 10 verwendet. Dafür wird eine Bildverzerrungs-, eine Helligkeits- und / oder eine Farbkorrektur der Kameraaufnahmen mittels der Parameter, die bei den Einzelkalibrierungen und der Gesamtkalibrierung bestimmt wurden, berechnet. Dies ist im Zusammenhang mit der Fig. 7 dargestellt.

Die Berechnung der Bildverzerrungs- Helligkeits- und/oder Farbkorrekturparameterwerte kann dabei in anderen Ausführungsformen nicht nur für eine Kugel mit dem Radius D, sondern für jede beliebige Fokusfläche 16, die den Kamera-Cluster 10 umgibt, berechnet werden (siehe Fig. 7). Es ist auch möglich, dass die Fokusfläche 16 sich innerhalb des Kamera-Clusters 10 befindet, wenn die Kameravorrichtungen 1, 2 nach innen gerichtet sind.

In dem hier beschriebenen Ausführungsbeispiel bildet ein Programm eine Fokusfläche 16, d.h. eine Kugel mit dem Radius D um den Kamera-Cluster 10 und berechnet, wie die einzelnen Abbildungen verzerrt, abgedunkelt, farbkorrigiert und / oder zusammengesetzt werden müssen, damit Objekte in D Metern Entfernung vom Kamera-Cluster beim Abbilden optimal zusammengesetzt werden.

Die Daten für die Bildverzerrung ("Warping") und die Helligkeits- und / oder Farbkorrekturen ("Blending") werden gespeichert. Es ist möglich, dass für verschiedene Entfernungen D (z. B. D1 = 1 m, D2 = 2 m, D2.5 = 2,50 m) separate Bildverzerrungsdaten, Helligkeits- und / oder Farbkorrekturen berechnet und abgespeichert werden.

Im Folgenden wird auf die Berechnung der Bildverzerrung im Einzelnen eingegangen.

Für jede Kameravorrichtung 1, 2 wird ein Gitternetz (Mesh) berechnet, das die Bildverzerrung beschreibt. Ein solches Gitternetz kann man sich als ein regelmäßiges Gitter im Kamerabildraum vorstellen, das für z. B. alle 16 Pixel $(X_m Y_m)$ im Kamerabild speichert, welcher Punkt $(X_n Y_n Z_n)$ im dreidimensionalen Raum 100 auf der Fokuskugel dieser Stelle zugeordnet werden soll.

Es wird also für alle Gitternetzpunkte 17 dieses Gitternetzes ein virtueller Lichtstrahl aus dem Zentrum der jeweiligen Kameravorrichtung 1, 2 durch diesen Gitternetzpunkt 17 in den Raum "geschossen". Jeder Lichtstrahl schneidet die kugelförmige Fokusfläche 16 in einem Schnittpunkt. Dieser Schnittpunkt wird für das Gitternetz gespeichert.

Zur Berechnung des Lichtstrahls durch den Gitternetzpunkt $X_m Y_m$ wird zunächst ein Lichtstrahl berechnet, der aus Sicht der Kameravorrichtung 1, 2 geradeaus durch ihren Bildmittelpunkt strahlt. Dies ist möglich, da die extrinsischen Parameter der einzelnen Kameravorrichtungen 1, 2 bekannt sind. Durch Verwendung der intrinsischen Parameter wird dieser Lichtstrahl dann so abgelenkt, dass er durch den Gitternetzpunkt $X_m Y_m$ verläuft. Anschließend wird nach bekannten Verfahren der Schnitt des Lichtstrahles mit der kugelförmigen Fokusfläche 16 im dreidimensionalen Raum 100 berechnet.

Im Folgenden wird auf die Berechnung der Helligkeits- und / oder Farbkorrekturen eingegangen.

Da sich die Aufnahmen der einzelnen Kameravorrichtungen 1, 2 an ihren Rändern überlappen, müssen sie hier in geeigneter Weise zusammengesetzt werden. Hier wird ein Softedge-Blending-Verfahren verwendet. Dies ist analog zu einer Situation mit mehreren Projektoren 31, die auf eine Fläche strahlen, wobei sich die Projektionen am Rand zumindest teilweise überlappen. Letztlich soll ein nahtloses Gesamtbild mit einer einheitlichen Helligkeit erhalten werden.

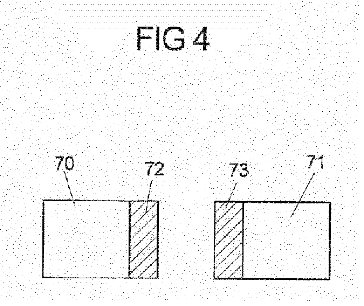

Durch die Berechnungen der Bildverzerrung ist bekannt, welchen Bereich der kugelförmigen Fokusfläche 16 welche Kameravorrichtung 1, 2 des Kamera-Clusters 10 aufnimmt. Mit Hilfe berechneter Blendbilder 70, 71 (siehe Fig. 4, die beiden Blendbilder 70, 71 sind nicht überlappend dargestellt.) werden die Aufnahmen so abgedunkelt und / oder farbkorrigiert, dass in den Überlappungsbereichen (72, 73) ein sogenanntes Cross-Fading entsteht, d.h. das eine Bild fadet ein, das andere fadet dementsprechend aus. Für den Bereich des Überlappens von Aufnahmen von mindestens zwei Kameravorrichtungen 1, 2 wird ein gewichtetes Mittel der Farbwerte für die Pixel verwendet.

Die genaue Wichtung der Farbwerte im Bereich des Überlappens von Aufnahmen von mindestens zwei Kameravorrichtungen 1, 2 hat Einfluss auf die visuelle Qualität der zusammengefügten Gesamtaufnahme eines Teils des dreidimensionalen Raums 100.

In einer Ausführungsform wird eine Wichtungsfunktion genutzt, die Sprünge beim Zusammenfügen der Aufnahmen der mindestens zwei Kameravorrichtungen 1, 2 vermeidet. Die Wichtungsfunktion ist auch in höheren Ableitungen stetig, da auch Unstetigkeiten in höheren Ableitungen zu sichtbaren Artefakten bei der Zusammensetzung der Aufnahmen der mindestens zwei Kameravorrichtungen 1, 2 führen.

In einer besonders bevorzugten Ausführungsform wird folgende Funktion zur Bestimmung der Wichtungsfaktoren benutzt, um sicherzustellen, dass Artefakte beim Zusammenfügen der Aufnahmen der mindestens zwei Kameravorrichtungen 1, 2 minimal sind:

$$\omega\big((x,y)\big) = \frac{1}{2}\sqrt[2]{(\cos(\pi * x) + 1) * (\cos(\pi * y) + 1)}$$

Dabei ist das 2D-Koordinatensystem für die Pixel der Aufnahmen der Kameravorrichtungen 1, 2 so normiert, dass x und y Werte im Intervall [-1, +1] annehmen.

Der hier beschriebene Verfahrensschritt "Kalibrierung des Kameras-Clusters", bei dem der Kamera-Cluster 10 fest auf eine bestimmte Distanz D kalibriert wird, kann technisch auch in den Bereich der "Echtzeit- Zusammensetzung der Rundumsicht" verschoben werden. Das heißt, dass diese Berechnung nicht einmal vorab, vor der gesamten Projektion, für einige bestimmte Entfernungen D durchgeführt wird, sondern während der Projektion ständig in Echtzeit neu berechnet wird, für einen beliebigen Abstand D, der gerade in diesem Moment geeignet erscheint (weil die gefilmten Objekte im Moment gerade diesen Abstand zum Kamera-Cluster aufweisen).

Das erhöht die Flexibilität des Systems, es ist dann nicht mehr auf die vorberechneten Abstände festgelegt. Wie bereits ausgeführt, muss z. B. die Fokusfläche 16, die sich durch den Abstand D ergibt, keine Kugel sein, sondern kann ein beliebig geformter Körper sein.

Im Folgenden werden einige Ausführungsformen von Verfahrensschritten beschrieben, die im Anschluss vorgenommen werden können, z. B. eine Projektion.

So kann aus je einem Satz einzelner Aufnahmen der Kameravorrichtungen 1, 2 ein Gesamtbild berechnet werden.

Die im zweiten Kalibrierungsschritt des Kamera-Clusters 10 ermittelten Bildverzerrungs-, Helligkeits- und / oder Farbkorrekturen werden dabei dazu verwendet, um aus den einzelnen Aufnahmen das Gesamtbild zu bilden.

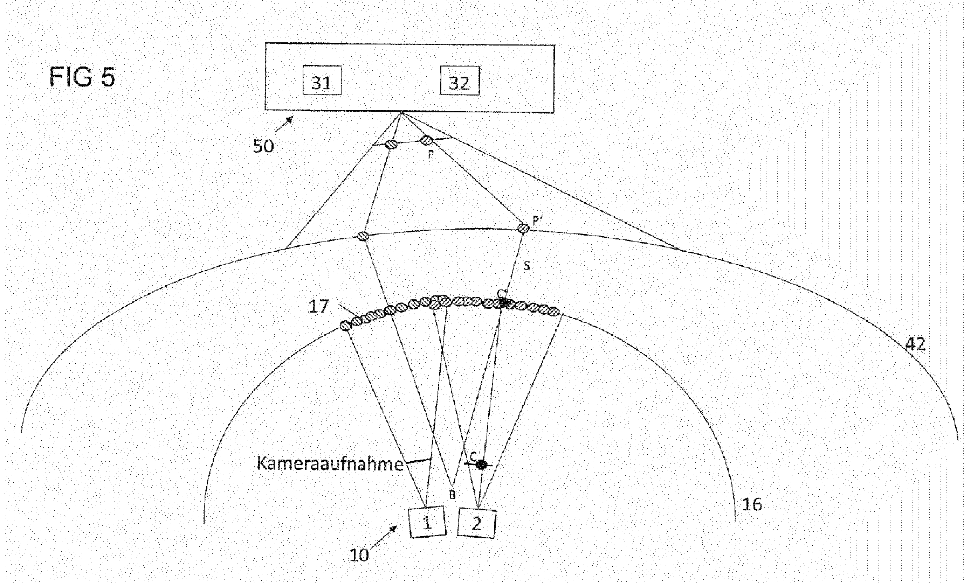

Mit Bezug auf Fig. 5 ist dazu jedem auszugebenden Bildpunkt P, ausgehend von einem Betrachtungspunkt, ein gerichteter Strahl S im Koordinatensystem der Fokusfläche 16 zugeordnet. Die den Bildpunkten P zugeordneten Strahlen werden mit der Fokusfläche 16 geschnitten. Aus der relativen Position der Schnittpunkte C' bezüglich der Fokusfläche 16 werden die zugehörigen Bildpunkte C der Kameraaufnahmen ermittelt. Die Farbwerte der auszugebenden Bildpunkte P werden als anhand der Blendbilder gewichtete Summe der zugehörigen Kamerabildpunktwerte C der Kameraaufnahmen bestimmt. Zum Zwecke der Farbanpassung können die Kameraaufnahmen vor oder während der Zuordnung mit Hilfe einer Korrekturabbildung modifiziert werden. Optional können jedem Bildpunkt auch Tiefenwerte als Distanz zwischen dem oben beschriebenen Betrachtungspunkt und dem Schnittpunkt mit der Fokusfläche 16 zugeordnet werden. Optional erfolgt die Zuordnung zwischen auszugebenden Bildpunkten und Bildpunkten der Kameraaufnahmen nur für ausgewählte Pixel und wird für andere durch Interpolation bekannter benachbarter Werte approximiert.

Die so zusammengesetzten Aufnahmen können mit Hilfe bekannter Techniken der Computergrafik mit weiteren Inhalten überlagert werden. Die Überlagerung kann teilweise transparent oder verdeckend anhand von Tiefenwerten erfolgen. Beispielsweise kann die Fokusfläche 16 für einen Unterwasserkameracluster mittels Sonar abgetastet werden, sodass der Nahbereich in Form der Kameraaufnahmen dargestellt wird und fernere, nicht erkennbare Objekte auf Basis der Sonardaten visualisiert werden.

Durch die Berechnung des Gesamtbildes entsteht eine Rundumsicht, zusammengesetzt aus den verzerrten, helligkeits- und / oder farbkorrigierten und zusammengesetzten Aufnahmen der Kameravorrichtungen 1, 2.

Bei bewegten Bildern ist die Synchronität der zu einem Gesamtbild verarbeiteten einzelnen Aufnahmen wichtig. Wenn nicht zeitlich genau zueinander passende Aufnahmen veränderlicher Szenen verwendet werden, führt das zu fehlerhaften Darstellungen an den Übergängen zwischen den Abbildungen.

Soll ein resultierendes Gesamtbild auf einen Untergrund projiziert werden, dessen Form nicht der Form der Fokusfläche 16 entspricht, oder soll die Projektion des Gesamtbildes spezielle Effekte aufweisen, muss das Gesamtbild für den Zieluntergrund oder entsprechend den Effekten spezifisch erneut verzerrt werden, wobei eine spezielle Projektionsabbildung entsteht. Ein Gesamtbild kann direkt oder nach einer untergrund- bzw. effektspezifischen Verzerrung auf Projektionsflächen 42 wie z.B. auf einem flachen Monitor, auf einem Panorama-Zylinder, in einer Kuppel oder auch auf einer anderen, den Betrachter umgebenden Projektionsfläche 42 dargestellt werden. Die auszugebenden Punkte P werden somit als ausgegebene Punkte P' auf der Projektionsfläche 42 sichtbar.

Es ist auch eine Darstellung in einem Head-Mounted Display, möglich. Statt der Darstellung in Echtzeit können resultierende Gesamtbilder auch in einer Bild- bzw. Video-Datei gespeichert werden. Abhängig vom Präsentationsgerät sind CubeMap-Faces oder Fulldomefilme möglich. Diese Bilder / Videos können später auf den genannten Ausgabe-Displays angezeigt werden.

Da die Bildverzerrungs-, Helligkeits- und / oder Farbkorrekturdaten für verschiedene Entfernungen D (z.B. D1 = 1 m, D2 = 2 m, ...) berechnet und gespeichert wurden, kann ein Betrachter auswählen, welcher Datensatz momentan für die Produktion von Gesamtbildern verwendet werden soll. Je nachdem, in welcher Entfernung etwa die Objekte liegen, die momentan dargestellt werden, kann er die nächstliegende Distanz D wählen. Für Werte dazwischen (z. B. D = 1,70) kann durch Interpolation zwischen anderen Datensätzen (in diesem Beispiel D1 und D2) ein Datensatz dazwischen berechnet werden.

Dies wird im Zusammenhang mit Fig. 5 näher erläutert. Fig. 5 zeigt schematisch einen Kamera-Cluster 10 mit zwei Kameravorrichtungen 1, 2 und einen Projektor(-Cluster) als Ausgabevorrichtung 50 mit zwei Projektoren 31, 32.

In Fig. 5 liegt die Fokusfläche 16 zwischen dem Kamera-Cluster 10 und der Repräsentation der Projektionsfläche 42. Sie kann sich jedoch abhängig von den Abständen Betrachter - Projektionsfläche 42 und Kamera-Cluster 10 - Fokusfläche 16 auch virtuell jenseits der Projektionsfläche 42 befinden oder diese schneiden.

Der Kamera-Cluster 10 wird einmalig auf die virtuelle Fokusfläche 16 mit dem Abstand D kalibriert, was im Zusammenhang mit der Fig. 7 noch näher beschrieben wird.

In Echtzeit wird der von den Kameravorrichtungen 1, 2 aufgenommene Live-Stream unter Verwendung der Bildverzerrungsdaten und der Helligkeits- und Farbkorrekturen auf eine CubeMap als abstrakte Projektionsabbildung abgebildet, wobei einzelne Aufnahmen der Kameravorrichtungen 1, 2 zu einem Gesamtbild zusammengesetzt werden. Eine CubeMap ist ein Hilfsmittel in der Computergrafik, um eine vollständige Umgebung des Betrachters zu berechnen. Dies wäre eigentlich eine Kugel, aber da in der Computerwelt Kugeln nur aufwändig annäherungsweise dargestellt werden können, wählt man hier oft eine einfache Darstellungsform, die den Betrachter umhüllen kann: einen Würfel mit 6 Seiten, die "CubeMap". Der Projektor(-Cluster) stellt als Ausgabevorrichtung 50 dieses zusammengesetzte Gesamtbild auf einer Projektionsfläche 42 dar.

Dazu wird in Echtzeit das Gesamtbild aus der CubeMap auf die Projektionsfläche 42 projiziert. Dabei zeigen die Projektoren 31, 32 jeweils ihr angepasstes Teilbild so an, dass auf der Projektionsfläche 42 eine nahtlose Projektion mit den zusammengesetzten Kamerabildern entsteht.

Dadurch entsteht eine nahtlose Abbildung eines Teils des dreidimensionalen Raums 100. Die Aufnahmen der Kameravorrichtungen 1, 2 werden so für eine vorbestimmte Entfernung D zu einer nahtlosen Abbildung zusammengefügt und von einer Ausgabevorrichtung 50 im Wesentlichen in Echtzeit ausgegeben.

Grundsätzlich ist es auch möglich, dass die Gesamtbilder auf eine Projektionsfläche 42 mit einer komplexen Geometrie projiziert werden. Dazu ist ggf. eine weitere, projektionsflächenspezifische Anpassung der Gesamtbilder erforderlich.

Die Kameravorrichtungen 1, 2 können alle zentral positioniert werden, wobei deren räumliche Blickwinkel 11, 12 nach außen gerichtet sind, wie dies beispielsweise in Fig. 1, 2A und 5 dargestellt ist. Wie oben erwähnt, ist in Fig. 2A ausschnittsweise eine Anordnung von fünf nach außen gerichteten Kameravorrichtungen 1, 2, 3, 4, 5 beispielhaft dargestellt.

Die Kameravorrichtungen 1, 2, 3 können aber auch so positioniert sein, dass ihre räumlichen Blickwinkel 11, 12, 13 jeweils auf einen Punkt zwischen den Kameravorrichtungen 1, 2, 3 gerichtet sind, wie dies in Fig. 2B dargestellt ist. Die drei Kameravorrichtungen 1, 2, 3 sind hier nach innen orientiert. Die drei Kameravorrichtungen 1, 2, 3 sind in einem Kreis so angeordnet, dass die räumlichen Blickwinkel 11, 12, 13 aller Kameravorrichtungen 1, 2, 3 nach innen gerichtet sind. Der räumliche Blickwinkel 11, 12, 13 jeder Kameravorrichtung 1, 2, 3 überlappt bei dieser Ausführungsform wenigstens teilweise mit dem räumlichen Blickwinkel 11, 12, 13 von anderen Kameravorrichtungen 1, 2, 3.

In einer weiteren, hier nicht dargestellten Ausführungsform sind mindestens zwei Kameravorrichtungen 1, 2 vorgesehen, die so angeordnet sind, dass eine zylindrische Rundumsicht im dreidimensionalen Raum 100 erfasst wird und mindestens eine weitere Kameravorrichtung 3 hinzugefügt wird, wobei der räumliche Blickwinkel 13 der hinzugefügten Kameravorrichtung 3 nach oben gerichtet ist. Der räumliche Blickwinkel 13 dieser Kameravorrichtung 3 überlappt wenigstens teilweise mit dem räumlichen Blickwinkel 11, 12 der weiteren Kameravorrichtungen 1, 2. Mit diesem Aufbau wird eine Halbkugel im dreidimensionalen Raum 100 erfasst (Öffnungswinkel: 360° horizontal und 180° vertikal). Dieser Aufbau eignet sich zum Beispiel für die Projektion in Kuppeln in Planetarien.

Alternativ kann zu mindestens einer Kameravorrichtung 1, 2, 3, die eine Halbkugel im dreidimensionalen Raum 100 erfasst, mindestens eine weitere Kameravorrichtung 4 hinzugefügt werden, deren räumlicher Blickwinkel 14 nach unten gerichtet ist. Der räumliche Blickwinkel 14 dieser Kameravorrichtung 4 überlappt wenigstens teilweise mit dem räumlichen Blickwinkel 11, 12, 13 der anderen Kameravorrichtung(en) 1, 2, 3. Mit diesem Aufbau wird eine Vollkugel im dreidimensionalen Raum 100 erfasst (Öffnungswinkel: 360° horizontal und 360° vertikal).

Um die Parameter zu bestimmen, die die Aufnahmecharakteristika der mindestens zwei Kameravorrichtungen 1, 2 beschreiben, werden - wie oben beschrieben - Kalibriermarkierungen 21 verwendet. Die Positionen der Kalibriermarkierungen 21 im dreidimensionalen Raum 100 und in Kalibrieraufnahmen der mindestens zwei Kameravorrichtungen 1, 2 werden einander zugeordnet.

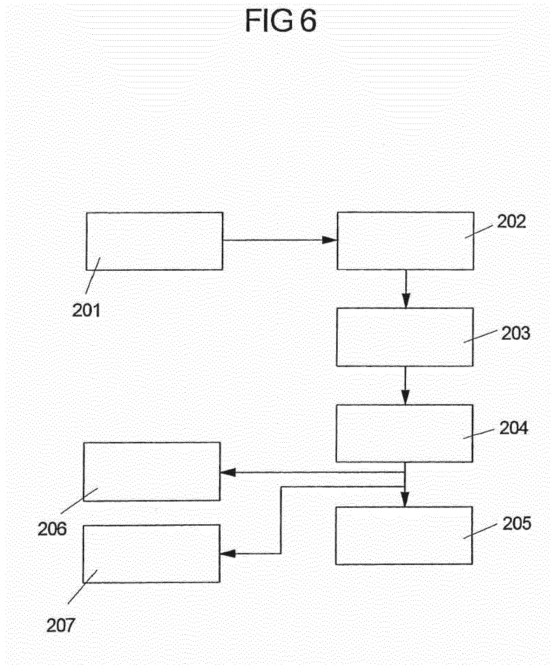

In Fig. 6 ist ein Ablaufdiagramm dargestellt, in dem die Phasen des Verfahrens dargestellt sind. Dabei kann auch die obigen Beschreibungen Bezug genommen werden.

Eingangsdaten 201 für das Verfahren sind die Kalibriermarkierungen 21, worauf Kalibrieraufnahmen erstellt werden. Mit diesen werden z.B. nach dem Verfahren von Tsai im ersten Kalibrierungsschritt 202 die Werte der Parameter der einzelnen Kameravorrichtungen 1, 2 berechnet, die die Aufnahmecharakteristika in jeder Kameravorrichtung 1, 2 beschreiben. Die so berechneten Parameter 203 bilden die Eingangsdaten für den zweiten Kalibrierungsschritt 204, bei dem der gesamte Kamera-Cluster 10 auf mindestens eine Distanz D kalibriert wird. In der Distanz D liegt dann eine Fokusfläche 16.

Das Ergebnis des zweiten Kalibrierungsschrittes 204 sind Gitternetze oder Meshes, die einen Teil der Fokusfläche 16 darstellen. Sie enthalten die Bildverzerrungskorrekturen. Auch werden Helligkeits- und/oder Farbkorrekturen für Blendbilder 70, 71 berechnet. Die Gitternetze oder Meshes sind Teil eines Bildverarbeitungsmittels 206, 207, d.h. sie umfassen Daten, die z.B. später separat verwendbar sind. Ein solches Bildverarbeitungsmittel 206, 207 kann z.B.

ein Datensatz oder ein Programm sein, das automatisch erzeugt wird, um z.B. mit den einmal berechneten Parametern (z.B. die Abbildungsvorschrift, die Fokusfläche 16, Gitternetz etc.) in einem anderen Aufnahmeszenario zu arbeiten. Somit stellen die Bildverarbeitungsmittel 206, 207 eigenständige technische Mittel dar, die im Rahmen der hier dargestellten Ausführungsform des Bildverarbeitungsverfahren erzeugt werden können.

So kann ein erstes Bildverarbeitungsmittel 206 auf einem maschinenlesbaren Medium oder als Datensatz ausgebildet sein, wobei dabei Werte für eine Bildverzerrungs-, eine Helligkeits- und / oder eine Farbkorrektur für mindestens eine Fokusfläche 16 mit vorbestimmten räumlichen Abständen D zum Kamera-Cluster 10 enthalten sind. Zusätzlich oder alternativ kann mittels ein zweites Bildverarbeitungsmittel 207 (auch wieder auf einem maschinenlesbaren Medium oder als Datensatz) eine Aufnahme des Kamera-Clusters 10 in mindestens eine Projektionsabbildung für mindestens eine Projektionsfläche umgewandelt werden, wobei die Projektionsabbildung aus korrigierten Aufnahmen der mindestens einen Kameravorrichtung 1, 2, 3, 4, 5 zusammengefügt ist.

Im anschließenden optionalen Projektionsschritt 205 werden die einzelnen Abbildungen unter Verwendung der Bildverzerrungs-, der Helligkeits- und der Farbkorrekturen zu einer Projektionsabbildung zusammengesetzt. Die Projektionsabbildung kann eine statische (ein unveränderliches Bild) oder Teil einer bewegten Abbildung (Video) sein. Dabei ist es insbesondere sinnvoll, eine nahtlose Projektion der Abbildungen zu erzeugen, die dann in den Gitternetzen unter Verwendung der Bildverzerrungskorrekturen und der Helligkeitskorrekturen repräsentiert wird.

In den Fig. 7 ist eine halbkugelförmige Fokusfläche 16 dargestellt, auf der die in den Gitternetzpunkten 17 der beiden Kameravorrichtungen 1, 2 gespeicherten Punktkoordinaten dargestellt sind. In Fig. 7 sind die Fokusflächen 16, 16' jeweils Halbkugelschalen (hier im Schnitt dargestellt), so dass die Abstände D1, D2 konstant sind. Dies muss nicht zwingend der Fall sein. Es ist grundsätzlich auch möglich eine komplex geformte Fokusfläche 16 zu verwenden, bei der der Abstand D zum Kamera-Cluster nicht konstant ist.

Zunächst wird der Kamera-Cluster 10 auf den Abstand D1 kalibriert. Aufgenommene Objekte im Abstand D1 können artefaktfrei zusammengefügt (gestitcht) werden. Bei Objekten mit in anderen Abständen wird es Doppelbilder geben. Dann wird der Kamera-Cluster auf den Abstand D2 kalibriert. Aufgenommene Objekte im Abstand D2 können artefaktfrei zusammengefügt (gestitcht) werden. Bei Objekten mit in anderen Abständen wird es Doppelbilder geben.

Damit werden in den Abständen D1, D2 zwei Fokusflächen 16, 16' berechnet.

Zur Gewinnung der Abbildungsvorschrift für eine Kameravorrichtung 1, 2, 3, 4, 5 bezüglich einer Fokusfläche 16 und einer Projektionsfläche 42 kann z.B. so vorgegangen werden, wobei auf Fig. 5 Bezug genommen wird:

1. Es wird eine Perspektive definiert und die Projektionsfläche 42 wird in Beziehung zum Kamera-Cluster (bei Bedarf einschließlich seiner aktuellen Position und Orientierung) gesetzt. Dazu kann beispielsweise ein Betrachtungspunkt B und eine Repräsentation der Projektionsfläche 42 im selben Koordinatensystem wie die Fokusfläche 16 definiert werden, sodass jedem Bildpunkt, gekennzeichnet durch eine Bildpunktkoordinate P, der Abbildung ein Punkt P' der Projektionsfläche 42 zugeordnet wird. Die Position des Betrachtungspunktes B bezüglich der Projektionsfläche 42 definiert dabei die Perspektive und kann analog zum Abbildungsursprung perspektivischer Abbildungen mittels Lochkameramodell aufgefasst werden.

2. Die bei der Kalibrierung gewonnenen Parameter jeder Kameravorrichtung 1, 2, 3, 4, 5 werden als Abbildung vom Kamerabild auf die Fokusfläche 16 im 3D-Raum repräsentiert. Diese Abbildung kann durch ein Gitternetz repräsentiert werden, wobei jeder Gitternetzpunkt 17 einem Punkt C' der Fokusfläche 16 eine Bildpunktkoordinate C der Kameraaufnahme zuordnet. Zur Bestimmung der Fokusflächenkoordinate C' eines Gitternetzpunktes 17 kann für eine Kamerabildpunktkoordinate C, anhand der bei der Kalibrierung gewonnenen Parameter, ein Strahl ermittelt und dessen Schnittpunkt C' mit der Fokusfläche 16 berechnet werden. Diese Berechnung kann für alle oder ausgewählte Bildpunktkoordinaten der Kameravorrichtung 1, 2, 3, 4, 5 erfolgen.

3. Jedem Gitternetzpunkt 17 wird zudem ein Punkt P' der Projektionsfläche 42 zugeordnet. Dazu kann ein Strahl S ausgehend vom Betrachtungspunkt B durch den Punkt C' der Fokusfläche 16 mit der Repräsentation der Projektionsfläche 42 im Punkt P' geschnitten werden. Somit ist für jeden Gitternetzpunkt 17 eine Zuordnung zwischen einer Bildpunktkoordinate P und einer Bildpunktkoordinate C der Kameraaufnahme bekannt (es sei denn, der Punkt liegt außerhalb des zu projizierenden Bereiches). Für Bildpunktkoordinaten P, die nicht explizit durch einen Gitternetzpunkt 17 beschrieben sind, kann eine solche Zuordnung mittels Interpolationsverfahren ermittelt werden.

Die Projektionsfläche 42 im vorliegenden Sinne kann prinzipiell beliebig geformt sein. Sie kann eine reale Projektionsfläche 42 (z. B. eine Projektionskuppel oder ein Computerbildschirm), eine virtuelle Projektionsfläche 42 (z. B. ein virtueller Projektionszylinder, wobei die Projektion aber als Abrollung auf einem Computerbildschirm dargestellt wird) oder eine generische Projektionsfläche 42 sein.

Eine generische Projektionsfläche 42 ist eine virtuelle Projektionsfläche 42, die eine effiziente Berechnung und Speicherung korrigierter Gesamtbilder und eine spätere möglichst verlustarme Transformation für eine reale Projektionsfläche 42 ermöglicht. Eine typische virtuelle Projektionsfläche 42 ist eine CubeMap, die z. B. eine Transformation für eine Kuppel oder eine Vollkugel, aber auch für eine Teilsicht auf einem Computerbildschirm ermöglicht.

Ein Gitternetz im Sinne dieses Textes ist ein Konstrukt, das Abbildungen zwischen mehreren Koordinatensystemen durch Gitternetzpunkte 17 beschreibt. Ein Gitternetzpunkt 17 ist eine Menge einander zuordenbarer Koordinaten mehrerer Koordinatensysteme. Koordinatenzuordnungen, die nicht explizit durch einen Gitternetzpunkt 17 beschrieben sind, können durch Interpolation der Koordinaten benachbarter Gitternetzpunkte 17 bestimmt werden.

Jeder Gitternetzpunkt 17 hat Werte (z. B. Farbwert, Helligkeitswert), die ihm z. B. durch den Verweis auf ein Pixel einer Kameraaufnahme (Farbwert) und auf ein Pixel des entsprechenden Blendbildes (Helligkeitswert) zugeordnet werden. Auf Blendbilder wird weiter unten eingegangen.

Eine solche Abbildungsvorschrift stellt einen eindeutigen Zusammenhang zwischen den Bildern des Kamera-Clusters 10 und einer Projektionsfläche 42 her. Dies kann z.B. durch einen funktionalen Zusammenhang, Tabellen und / oder Gitternetze geschehen. So können die Zuordnungen zwischen Fokusfläche 16 und Projektionsfläche 42 als Tabelle gespeichert werden.

Eine so gewonnene Abbildungsvorschrift ermöglicht für jeden zu ermittelnden Bildpunkt einer Projektionsabbildung eine Zuordnung einer Bildpunktkoordinate einer Kameraaufnahme, falls die entsprechende Sichtrichtung von der Kameravorrichtung erfasst wird. Entsprechend können den Bildpunkten der Projektionsabbildung Werte (z.B. Farbwert, Helligkeitswert) der Kameraaufnahme zugeordnet werden. Dabei kann zur Ermittlung des zugehörigen Wertes einer Kamerabildpunktkoordinate eine Interpolation erfolgen. Die Verzerrungskorrektur ("Warping") ergibt sich in diesem Fall aus der Zuordnung der Kamerabildpunkte zu Projektionsflächenpunkten. Auf die Bestimmung von Farb- und Helligkeitswerten wird weiter hinten eingegangen.

Um mehrere Kameraaufnahmen in eine Projektionsabbildung abzubilden, kann eine Selektion oder gewichtete Mittelung redundant bestimmter Werte erfolgen. Im Falle der gewichteten Mittelung können die Bildpunktkoordinaten der Kameraaufnahmen verwendet werden, um geeignete Wichtungsfaktoren zu bestimmen.

Die Komposition mehrerer Kamerabilder mittels gewichteter Mittelung kann effizient erfolgen, indem, neben den Produkten aus Wert und Wichtungsfaktor jeder Kamerabildpunktkoordinate, auch die Wichtungsfaktoren aller Kamerabildpunktkoordinaten für jeden Bildpunkt der zu erstellenden Abbildung akkumuliert werden. Die resultierenden Werte für Bildpunkte, die von mindestens einer Kameraaufnahme abgedeckt sind, ergeben sich dann als Quotient aus gewichteter Werteakkumulation und Akkumulation der Wichtungsfaktoren. Der Wert F eines Bildpunktes der Projektionsfläche 42 an der Koordinate (x,y) kann anhand der Abbildungsvorschriften $C_i$ (die den Bildpunktkoordinaten der Projektionsfläche 42 Bildpunktkoordinaten der Kamerabilder zuordnen) der Kameraaufnahmen $A_i$ (die den Kamerabildpunktkoordinaten Werte zuordnen) und der Wichtungsfunktionen $\omega_i$ (die den Kamerabildpunktkoordinaten Wichtungsfaktoren zuordnen), wobei $\omega_i$ für alle Kameravorrichtungen identisch definiert sein können, wie folgt ermittelt werden:

$$F(x,y) = \frac{\sum(A_i(C_i(x,y))\omega_i(C_i(x,y)))}{\sum \omega_i(C_i(x,y))}$$

Geeignete Wichtungsfunktionen reduzieren den Einfluss der einzelnen Kamerabilder auf eine komponierte Projektionsabbildung zum Rand der Kameraaufnahme hin auf Null. Konkrete Beispiele folgen in späteren Abschnitten.

Alternativ können die Wichtungsfaktoren bezüglich einer Fokusfläche 16, in Form sogenannter Blendbilder, vornormiert werden, sodass zur Komposition mehrerer Kamerabilder nur die Produkte aus Wert und Blendbildwert jeder Kamerabildpunktkoordinate akkumuliert werden müssen. Dabei ordnen die Blendbilder $B_i$ jeder Bildpunktkoordinate einer Kameravorrichtung 1, 2, 3, 4, 5 einen vornormierten Wichtungsfaktor zu, sodass der Wert F eines Bildpunktes (x,y) wie folgt bestimmt werden kann:

$$F(x,y) = \sum(A_i(C_i(x,y))B_i(C_i(x,y)))$$

Diese Blendbilder sind unabhängig von der Projektionsabbildung, sodass Abbildungen für verschiedene Perspektiven ohne Neuberechnung erfolgen können.

Ein Blendbild bezüglich einer Fokusfläche 16 und einer Wichtungsfunktion kann beispielsweise folgendermaßen ermittelt werden:

1. Der Verfahrensschritt 2 obiger Verfahrensbeschreibung zur Gewinnung der Abbildungsvorschriften zur Präsentation der Kameraaufnahmen wird für jede Kameravorrichtung 1, 2, 3, 4, 5 eines Kamera-Clusters 10 ausgeführt. Im Ergebnis ist für jede Kameravorrichtung 1, 2, 3, 4, 5 ein Gitternetz bekannt, das die Zuordnung einer Kamerabildpunktkoordinate C zu einer Koordinate C' auf der Fokusfläche 16 ermöglicht.
2. Für jede Bildpunktkoordinate C der Kameravorrichtung 1, 2, 3, 4, 5 wird ermittelt, ob und welche Bildpunktkoordinaten anderer Kameras des Kameraclusters dem zugeordneten Punkt C' auf der Fokusfläche 16 zuzuordnen sind. Die Zuordnung der Bildpunktkoordinaten kann anhand der relativen Lage des Fokusflächenpunktes C' bezüglich der Gitternetzpunkte 17 anderer Kameravorrichtungen 1, 2, 3, 4, 5 bestimmt werden. Entsprechend kann dem Fokusflächenpunkt C' auch für jede Kameravorrichtung 1, 2, 3, 4, 5 der Wert der Wichtungsfunktion zugeordnet werden, sodass auch die Summe der Wichtungsfaktoren aller Kameravorrichtungen 1, 2, 3, 4, 5 für den Punkt der Fokusfläche 16 bekannt ist.

3. Für jede Bildpunktkoordinate C der Kameravorrichtung 1, 2, 3, 4, 5 wird der Wert des Blendbildes als Quotient aus Wert der Wichtungsfunktion an der Koordinate C und der Summe aller Wichtungsfaktoren am Fokusflächenpunkt C' ermittelt.

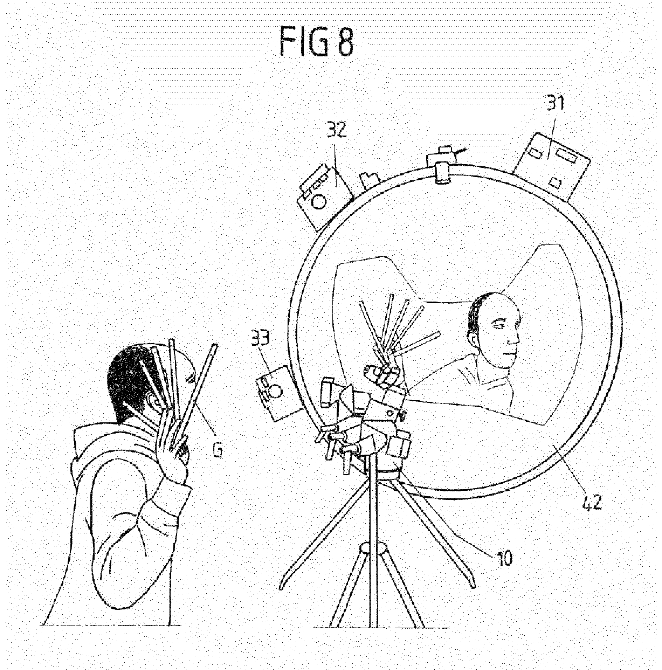

In Fig. 8 wird schematisch ein Laboraufbau dargestellt, bei dem ein Kamera-Cluster 10 einen Gegenstand G in Bewegung aufnimmt. Die Projektoren 31, 32 und 33 projizieren jeweils einen geeigneten Teil eines Gesamtbildes, ggf. verzerrungs-, helligkeits- und/oder farbkorrigiert, auf eine halbkugelförmige Projektionsfläche 42 in Echtzeit. Die einzelnen Abbildungen werden dabei zunächst homogen, nahtlos, schattenbildfrei und aus der Sicht eines Betrachters, der sich an einem bestimmten Punkt befindet, verzerrungsfrei zu einem Gesamtbild zusammengesetzt.

Die Ausführungsformen des Verfahrens und der Vorrichtung lassen sich z. B. dazu verwenden, um Surround-Filme herzustellen, z. B. Panoramen oder Kuppelfilme bis hin zu die gesamte Umgebung abdeckenden "Vollkugel"-Filmen. Durch die vielen Kameravorrichtungen 1, 2, 3, 4, 5 kann man ein Vielfaches der Auflösung von z. B. Fisheye-Kameras erreichen, was zu einer deutlich höheren Bildschärfe führt. Die Lösung ist nahezu beliebig skalierbar. Durch die Verwendung von günstigen, kleinen Kameravorrichtungen 1, 2, 3, 4, 5 (z. B. Webcams, Handy-Kameramodule) ist diese Lösung auch deutlich kostengünstiger als höherauflösende Kameras.

Die Echtzeitfähigkeit des Systems erlaubt ein Live-Streaming des Umgebungs-Bildes, dargestellt z. B. in einer Kuppel, was mit bisherigen Panorama-Stitching-Programmen nicht möglich ist, da sie eine zeitintensive Offline-Berechnung erfordern. So kann ein Konzert oder Sportereignis als Rundumsicht an einen anderen Ort gestreamt werden, und dort z. B. in einer Kuppelprojektion oder in VR Brillen betrachtet werden. In diesem Fall wird bevorzugt aus den zeitgleichen Kamerabildern jeweils ein Gesamtvideobild zusammengesetzt und dieses dann an den fernen Ort übertragen.

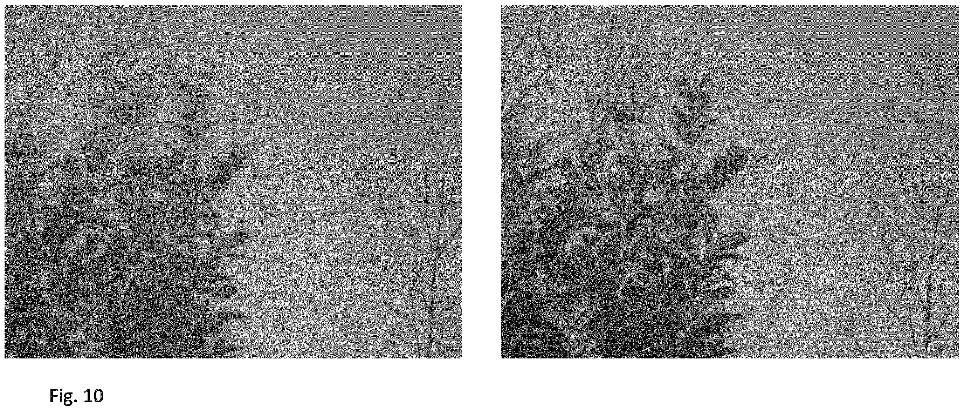

Der Kamera-Cluster 10 kann so gestaltet werden, dass jeder Punkt der Umgebung im dreidimensionalen Raum 100 (in einem gewissen Mindestabstand) von mindestens zwei Kameravorrichtungen 1, 2 mit nicht übereinstimmenden optischen Zentren aufgenommen wird. Setzt man in einem solchen Aufbau Signalverarbeitungsalgorithmen ein, die übereinstimmende Punkte in mehreren Kamerabildern identifizieren, kann zusammen mit den Kalibrierparametern des Kamera-Clusters 10 eine dreidimensionale Abbildung der Umgebung erstellt werden. Damit kann die Fokusfläche 16 dynamisch anhand der Bildinhalte bestimmt werden, wodurch "Ghostingeffekte" (wenn die Kamerabilder nicht perfekt aneinanderpassen) vermieden werden (siehe Fig. 10).

Die dreidimensionalen Umgebungsdaten ermöglichen auch, die Szene aus verschiedenen Blickpunkten darzustellen und stereoskopische Darstellungen zu generieren. Zudem erlaubt die Verwendung von dreidimensionalen Daten den Einsatz robusterer Verfahren zur Objekterkennung und -segmentierung, wodurch vielfältige Möglichkeiten zur automatisierten Bearbeitung der Szene eröffnet werden (z. B. Überlagern oder Ausblenden einzelner Objekte).

Die Kameravorrichtungen 1, 2 müssen nicht notwendigerweise nah beieinander montiert sein. Alternativ können auch Kameravorrichtungen in der Umgebung der aufzuzeichnenden Szene als Kamera-Cluster 10 eingemessen werden. Eine solche Situation ist z.B. in Fig. 2B dargestellt. Auch in diesem Fall lassen sich Darstellungen erzeugen, deren Perspektive frei wählbar ist und nicht auf die tatsächlichen Kamerapositionen beschränkt ist.

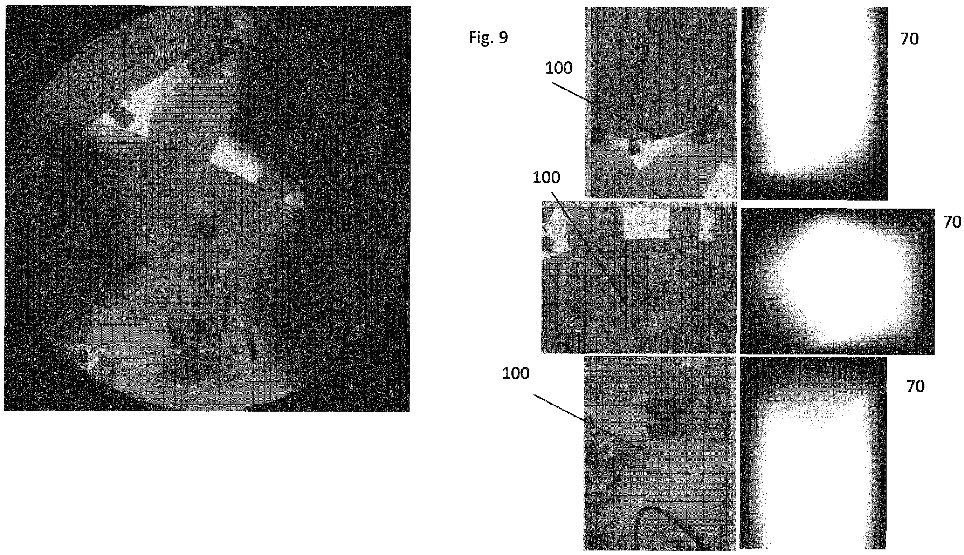

Fig. 9 zeigt rechts drei Aufnahmen, die mit einem Kamera-Cluster 10 mit drei Kameravorrichtungen 1, 2, 3 aufgenommen wurden. Das untere Bild zeigt den Bodenbereich eines Raums 100, das mittlere einen Deckenbereich des Raums 100, das obere Bild einen Wandbereich des Raums 100. Rechts neben den Abbildungen des Raums sind die jeweils zugeordneten Blendbilder 70 dargestellt.

Auf der linken Seite der Fig. 9 ist eine aus den drei Teilabbildungen zusammengesetzte Abbildung dargestellt.

In dem linken Teil der Fig. 9 ist ferner für das untere Teilbild ein Gitternetz eingezeichnet, das die lokalen Verzerrungen und Verformungen visualisiert.

Im Ergebnis entsteht eine Gesamtansicht (linke Seite der Fig. 9), die aus drei Teilansichten zusammengesetzt wurde.

In Fig. 10 sind zwei Abbildungen einer Szene dargestellt, wobei in der linken Abbildung Ghosting-Effekte deutlich zu erkennen sind. Diese entstehen durch nicht optimal zur Deckung gebrachte Doppelbilder im Überlappbereich zweier oder mehrerer Kameravorrichtungen 1, 2, 3, 4, 5. Rechts ist dann die durch das Bildverarbeitungsverfahren korrekt zusammengesetzte Abbildung zu erkennen.

**Bezugszeichen**

1,2,3,4,5    Kameravorrichtung

10    Kamera-Cluster

11,12,13,14,15    räumlicher Blickwinkel

16    Fokusfläche (virtuelle Abbildungsfläche, virtuelle Kugelfläche)
17    Gitternetzpunkt

20    Lasersystem
21    Kalibriermarkierungen

31, 32, 33    Projektor

42    Projektionsfläche

50    Ausgabevorrichtung

70, 71    Blendbilder
72, 73    Überlappungsbereich der Blendbilder

100    dreidimensionaler Raum

201    Erstellung Kalibrieraufnahmen unter Verwendung von Kalibriermarkierungen

202    Zuordnung der Position der Kalibriermarkierungen zu ihren Abbildungen in den Kalibrieraufnahmen

203    erster Kalibrierungsschritt (Einzelkalibrierung, z.B. Verfahren nach Tsai)
204    zweiter Kalibrierungsschritt, Gesamtkalibrierung
205    Projektion eines Gesamtbildes
206    erstes Bildverarbeitungsmittel
207    zweites Bildverarbeitungsmittel

B    Betrachtungspunkt (Fig. 5)

C    Dem Bildpunkt P zugeordneter Bildpunkt der Kamera 2 (Fig. 5)
C'    Bildpunkt der Kamera 2 auf der Fokusfläche
G    Gegenstand
P    auszugebender Bildpunkt (Fig. 5)
P'    ausgegebener Bildpunkt (Fig. 5) auf Fokusfläche
S    dem Bildpunkt P zugeordneter Strahl (Fig. 5)


**Patentansprüche**

1. Bildverarbeitungsverfahren zur Erzeugung von Abbildungen eines Teils eines dreidimensionalen Raums (100) mit einem Kamera-Cluster (10) mit mindestens zwei Kameravorrichtungen (1, 2, 3, 4, 5) mit einem zur Kameravorrichtung gehörigem Kamerabildraum und / oder mit einem Kamera-Cluster (10) mit mindestens einer Kameravorrichtung (1, 2, 3, 4, 5) mit einem zur Kameravorrichtung gehörigem Kamerabildraum, die entlang einer räumlich bekannten Bahn mit einer bekannten Bewegungsgröße bewegt wird, wobei

a) der Kamera-Cluster (10) im dreidimensionalen Raum (100) positioniert wird und
b) eine Kalibrierung der Parameter (203), die die Aufnahmecharakteristika der Kameravorrichtung (1, 2, 3, 4, 5) beschreiben, durch die Aufnahme von im dreidimensionalen Raum (100) angeordneten Kalibriermarkierungen (21) und eine Zuordnung der Kalibriermarkierungen (21) im dreidimensionalen Raum (100) zu einer vom Kamera-Cluster (10) generierten mindestens einen Kalibrieraufnahme erfolgt, wobei die Positionen der Kalibriermarkierungen (21) in einem Koordinatensystem relativ zueinander bekannt sind, und
c) anschließend mittels der vom Kamera-Cluster (10) generierten mindestens einen Kalibrieraufnahme Werte

16

für eine Bildverzerrungs-, eine Helligkeits- und / oder eine Farbkorrektur für mindestens eine Fokusfläche (16) als virtuelle Fläche im dreidimensionalen Raum mit jeweils mindestens einem vorbestimmten räumlichen Abstand (D) zum Kamera-Cluster (10), berechnet werden,

d) indem jedem Pixel in den Aufnahmen des Kamera-Clusters (10) ein Punkt im dreidimensionalen Raum (100) in einer vorbestimmten Entfernung zum Kamera-Cluster auf der mindestens einen Fokusfläche (16) zugeordnet wird, wobei

e) die mindestens eine dreidimensionale Fokusfläche (16) eine Kugel mit einem Radius (D) um den Kamera-Cluster (10) oder eine beliebig geformte Fokusfläche (16) mit mindestens einem vorbestimmten räumlichen Abstand (D) zum Kamera-Cluster, die den Kamera-Cluster (10) umgibt, insbesondere eine Halbkugelfläche (16), ist oder die mindestens eine Fokusfläche (16) sich mit mindestens einem vorbestimmten räumlichen Abstand (D) zum Kamera-Cluster (10) innerhalb des Kamera-Clusters (10) befindet, wenn die Kameravorrichtungen (1, 2) nach innen gerichtet sind und

f) die Parameter (203) die Eingangsdaten für einen zweiten Kalibrierungsschritt (204) sind, bei dem der gesamte Kamera-Cluster (10) auf den mindestens einen räumlichen Abstand oder die räumlichen Abstände (D) des Kamera-Clusters (10) zur mindestens einen Fokusfläche kalibriert wird, wobei Bildverzerrungskorrekturen unter Verwendung von Gitternetzen für je eine der Kameravorrichtungen (1,2,3,4,5) erzeugt werden, wobei die Gitternetze Teil eines Bildverarbeitungsmittels (206, 207) sind und Zuordnungen zwischen Punkten des jeweiligen Kamerabildraumes und solchen der mindestens einen Fokusfläche (16) enthalten, wie insbesondere eine Zuordnung gemäß Merkmal d).

2. Bildverarbeitungsverfahren nach Anspruch 1, **dadurch gekennzeichnet, dass** mittels einer Abbildungsvorschrift mindestens eine Aufnahme des Kamera-Clusters (10) in mindestens eine Projektionsabbildung für mindestens eine Projektionsfläche (42) umgewandelt wird, wobei die Projektionsabbildung aus korrigierten Aufnahmen der Kameravorrichtung (1, 2, 3, 4, 5) zusammengefügt wird.

3. Bildverarbeitungsverfahren nach Anspruch 2, **dadurch gekennzeichnet, dass** die Projektionsabbildung von einer Ausgabevorrichtung (50) in Echtzeit oder im Wesentlichen in Echtzeit, bezogen auf den Zeitpunkt der Aufnahme durch den Kamera-Cluster, ausgegeben wird.

4. Bildverarbeitungsverfahren nach Anspruch 1 oder 2, **dadurch gekennzeichnet, dass** mittels einer Abbildungsvorschrift mindestens eine Aufnahme des Kamera-Clusters (10) in ein abspeicherbares und weiterverarbeitbares Gesamtbild umgewandelt wird, wobei das Gesamtbild aus korrigierten Aufnahmen der mindestens einen Kameravorrichtung (1, 2, 3, 4, 5) zusammengefügt wird.

5. Bildverarbeitungsverfahren nach mindestens einem der vorhergehenden Ansprüche, **dadurch gekennzeichnet, dass** unter Anwendung der gewonnenen Bildverzerrungs-, Helligkeits- und/oder Farbkorrekturparameterwerte ein homogenes, nahtloses, Versatz- und Schattenbild-freies Gesamtbild erzeugt wird, das abgespeichert und/oder, insbesondere zu einer Projektionsabbildung, weiterverarbeitet wird.

6. Bildverarbeitungsverfahren nach mindestens einem der vorhergehenden Ansprüche, **dadurch gekennzeichnet, dass** die mindestens eine Fokusfläche (16) mindestens zum Teil durch eine Laserabtastung, eine Time-of-Flight-Abstandsmessung, eine bildbasierte Erkennung eines identifizierbaren Objektes, stereometrische optische Mustererkennung und / oder durch Abstandsmessungen benachbarter, überlappender Kameravorrichtungen bestimmt wird.

7. Bildverarbeitungsverfahren nach mindestens einem der vorhergehenden Ansprüche, **dadurch gekennzeichnet, dass** die Abbildungsvorschrift und/oder die Projektionsabbildung in Echtzeit oder im Wesentlichen in Echtzeit, bezogen auf den Aufnahmezeitpunkt der zu präsentierenden Aufnahmen des Kamera-Clusters, ermittelt wird.

8. Bildverarbeitungsverfahren nach mindestens einem der vorhergehenden Ansprüche, **dadurch gekennzeichnet, dass** Kalibriermarkierungen (21) durch ein Lasersystem (20), insbesondere mit genau einem bewegten Laser, projiziert werden und / oder Kalibriermarkierungen (21) im dreidimensionalen Raum (100) sichtbare Gegenstände und / oder geometrische Strukturen und / oder LEDs und / oder Ultraviolett-Markierungen und / oder Infrarot-Markierungen sind.

9. Bildverarbeitungsverfahren nach mindestens einem der vorhergehenden Ansprüche, **dadurch gekennzeichnet, dass** Bildverzerrungs-, Helligkeits- und/oder Farbkorrekturwerte für eine erste Fokusfläche (16), insbesondere eine erste Kugel (K1), und eine zweite Fokusfläche (16), insbesondere eine zweite Kugel (K2), berechnet werden und

- während einer Darstellung jeweils zwischen der ersten und zweiten Fokusfläche (16) umgeschaltet wird, je nachdem, in welchem Abstand sich ausgewählte Objekte befinden, und / oder
- während einer Darstellung jeweils eine Interpolation zwischen den Werten der ersten und zweiten Fokusfläche (16) vorgenommen wird, um eine optimale Darstellung von Objekten zu erzielen.

**10.** Bildverarbeitungsverfahren nach mindestens einem der vorhergehenden Ansprüche, **dadurch gekennzeichnet, dass** die um die Bildverzerrung, die Helligkeit und / oder die Farbwerte korrigierten Aufnahmen des Kamera-Clusters (10)

- als Projektionsabbildung auf die Oberfläche einer Kugel (42) oder eines Teiles einer Kugel (42) oder auf beliebig geformte, einen dreidimensionalen Raum begrenzende Flächen projiziert werden, so dass eine nahtlose Abbildung eines Teils des dreidimensionalen Raums (100) entsteht, und / oder
- auf eine CubeMap abgebildet werden.

**11.** Bildverarbeitungsverfahren nach mindestens einem der vorhergehenden Ansprüche, **dadurch gekennzeichnet, dass** die Bildverzerrungskorrektur den Bildpunkten der Projektionsabbildung neben den Bildpunkten der Aufnahmen des Kamera-Clusters (10) auch den Abstand zwischen einem Betrachtungspunkt und der Fokusfläche (16) als Tiefenwert zuordnet.

**12.** Bildverarbeitungsverfahren nach mindestens einem der vorhergehenden Ansprüche, **dadurch gekennzeichnet, dass** einander überlappende Aufnahmen des Kamera-Clusters (10) mittels einer Wichtungsfunktion, bei der mindestens die erste Ableitung stetig ist, abhängig von den Kamerabildpunktkoordinaten abgedunkelt werden, so dass Qualitätsstörungen in zusammengesetzten Abbildungen reduziert werden, wobei die Wichtungsfunktion insbesondere die Form

$$\omega\big((x,y)\big) = \frac{1}{2}\sqrt[2]{(\cos(\pi * x) + 1) * (\cos(\pi * y) + 1)}$$

hat.

**13.** Bildverarbeitungsmittel auf einem maschinenlesbaren Medium oder als Datensatz enthaltend Werte für eine Bildverzerrungs-, eine Helligkeits- und / oder eine Farbkorrektur für mindestens eine Fokusfläche (16) mit mindestens einem vorbestimmten räumlichen Abstand (D) zu einem Kamera-Cluster (10) berechnet für das Kamera-Cluster (10) nach einem Verfahren der Ansprüche 1 bis 12.

**14.** Bildverarbeitungsmittel auf einem maschinenlesbaren Medium oder als Datensatz berechnet für ein Kamera-Cluster (10) mit mindestens einer Kameravorrichtung (1, 2, 3, 4, 5) nach einem Verfahren der Ansprüche 2 bis 12, wobei mindestens eine Aufnahme des Kamera-Clusters (10) in mindestens eine Projektionsabbildung für mindestens eine Projektionsfläche (42) umwandelbar ist, wobei die Projektionsabbildung aus korrigierten Aufnahmen der mindestens einen Kameravorrichtung (1, 2, 3, 4, 5) zusammenfügbar ist.

**15.** Bildverarbeitungsvorrichtung zur Erzeugung von Abbildungen eines Teils eines dreidimensionalen Raums (100) mit einem Kamera-Cluster (10), der im dreidimensionalen Raum positioniert ist, mit mindestens zwei Kameravorrichtungen (1, 2, 3, 4, 5) mit einem zur Kameravorrichtung gehörigem Kamerabildraum und / oder mit einem Kamera-Cluster (10) mit mindestens einer Kameravorrichtung (1, 2, 3, 4, 5) mit einem zur Kameravorrichtung gehörigem Kamerabildraum, die entlang einer räumlich bekannten Bahn mit einer bekannten Bewegungsgröße bewegbar ist, besagte Bildverarbeitungsvorrichtung umfasst

- ein Mittel zur Kalibrierung der Parameter (203), die die Aufnahmecharakteristika der Kameravorrichtung (1, 2, 3, 4, 5) beschreiben, ausgebildet und eingerichtet zur Aufnahme von im dreidimensionalen Raum (100) angeordneten Kalibriermarkierungen (21) und eine Zuordnung der Kalibriermarkierungen (21) im dreidimensionalen Raum (100) zu einer vom Kamera-Cluster (10) generierten mindestens einen Aufnahme, wobei die Positionen der Kalibriermarkierungen (21) in einem Koordinatensystem relativ zueinander bekannt sind und
- ein Berechnungsmittel für die Berechnung von Werten für eine Bildverzerrungs-, eine Helligkeits- und / oder eine Farbkorrektur für mindestens eine Fokusfläche (16) als virtuelle Fläche im dreidimensionalen Raum mit jeweils mindestens einem vorbestimmten räumlichen Abstand (D) zum Kamera-Cluster (10) mittels der vom Kamera-Cluster (10) generierten mindestens einen Kalibrieraufnahme, wobei jedem Pixel in den Aufnahmen des Kamera-Clusters (10) ein Punkt im dreidimensionalen Raum (100) in einer vorbestimmten Entfernung zum Kamera-Cluster auf der mindestens einen Fokusfläche zugeordnet wird, und die Parameter (203) die Eingangsdaten für einen zweiten Kalibrierungsschritt (204) sind, bei dem der gesamte Kamera-Cluster (10) auf den mindestens einen räumlichen Abstand (D) oder die räumlichen Abstände (D) des Kamera-Clusters zur mindestens einen Fokusfläche kalibriert wird, wobei Bildverzerrungskorrekturen unter Verwendung von Gitternetzen für je eine der Kameravorrichtungen (1, 2, 3, 4, 5) erzeugt werden, wobei die Gitternetze Teil eines Bildverarbeitungsmittels (206, 207) sind und Zuordnungen zwischen Punkten des jeweiligen Kamerabildraumes und solchen der mindestens einen Fokusfläche (16) enthalten, und
- wobei die mindestens eine Fokusfläche (16) eine Kugel mit einem Radius (D) um den Kamera-Cluster (10) oder eine beliebig geformte Fokusfläche (16) mit mindestens einem vorbestimmten räumlichen Abstand (D) zum Kamera-Cluster, die den Kamera-Cluster (10) umgibt, insbesondere eine Halbkugelfläche (16), ist oder die Fokusfläche (16) sich mit mindestens einem vorbestimmten räumlichen Abstand (D) zum Kamera-Cluster (10) innerhalb des Kamera-Clusters (10) befindet, wenn die Kameravorrichtungen (1, 2) nach innen gerichtet sind.

## Claims

1. An image processing method for generating images of a part of a three-dimensional space (100) by means of a camera cluster (10) comprising at least two camera devices (1, 2, 3, 4, 5) with a camera image space belonging to the camera device and/or by means of a camera cluster (10) comprising at least one camera device (1, 2, 3, 4, 5) with a camera image space belonging to the camera device, which is moved along a spatially known path with a known amount of movement, wherein

    a) the camera cluster (10) is positioned in the three-dimensional space (100), and
    b) a calibration of the parameters (203) that describe the recording characteristics of the camera device (1, 2, 3, 4, 5) is effected by recording calibration marks (21) arranged in the three-dimensional space (100) and an allocation of the calibration marks (21) in the three-dimensional space (100) to an at least one calibration image generated by the camera cluster (10), wherein the positions of the calibration marks (21) in a coordinate system relative to each other are known, and
    c) subsequently, by means of the at least one calibration image generated by the camera cluster (10), values for an image distortion correction, a brightness correction and/or a color correction are calculated for at least one focus area (16) as a virtual area in the three-dimensional space, each with at least one predetermined spatial distance (D) to the camera cluster (10),
    d) by associating with each pixel in the images of the camera cluster (10) a point in the three-dimensional space (100) at a predetermined distance to the camera cluster on the at least one focus area (16), wherein
    e) the at least one three-dimensional focus area (16) is a sphere with a radius (D) around the camera cluster (10) or an arbitrarily shaped focus area (16) with at least one predetermined spatial distance (D) to the camera cluster, which surrounds the camera cluster (10), in particular a hemispherical area (16), or the at least one focus area (16) is located inside the camera cluster (10) with at least a predetermined spatial distance (D) to the camera cluster (10), when the camera devices (1, 2) are directed to the inside, and
    f) the parameters (203) are the input data for a second calibration step (204) in which the entire camera cluster (10) is calibrated to the at least one spatial distance or the spatial distances (D) of the camera cluster (10) to the at least one focus area, wherein image distortion corrections are generated by using grids for each of the camera devices (1, 2, 3, 4, 5), wherein the grids are part of an image processing means (206, 207) and contain mappings between points of the respective camera image space and those of the at least one focus area (16), such as in particular a mapping according to feature d).

2. The image processing method according to claim 1, **characterized in that** by means of a mapping rule at least one image of the camera cluster (10) is converted into at least one projection image for at least one projection area (42), wherein the projection image is assembled from corrected images of the camera device (1, 2, 3, 4, 5).

3. The image processing method according to claim 2, **characterized in that** the projection image is output from an output device (50) in real time or substantially in real time, based on the time of recording by the camera cluster.

4. The image processing method according to claim 1 or 2, **characterized in that** by means of a mapping rule at least one image of the camera cluster (10) is converted into a storable and further-processable overall image, wherein the overall image is assembled from corrected images of the at least one camera device (1, 2, 3, 4, 5).

5. The image processing method according to at least one of the preceding claims, **characterized in that**, using the image distortion, brightness and/or color correction parameter values obtained, a homogeneous, seamless, offset-free and shadow-free overall image is generated, which is stored and/or further processed, in particular to form a projection image.

6. The image processing method according to at least one of the preceding claims, **characterized in that** the at least one focus area (16) is determined at least in part by laser scanning, time-of-flight distance measurement, image-based recognition of an identifiable object, stereometric optical pattern recognition, and/or distance measurements of adjacent, overlapping camera devices.

7. The image processing method according to at least one of the preceding claims, **characterized in that** the mapping rule and/or the projection image is determined in real time or substantially in real time, based on the recording time of the images of the camera cluster to be presented.

8. The image processing method according to at least one of the preceding claims, **characterized in that** calibration marks (21) are projected by a laser system (20), in particular with exactly one moving laser, and/or calibration marks (21) in the three-dimensional space (100) are visible objects and/or geometric structures and/or LEDs and/or ultraviolet marks and/or infrared marks.

9. The image processing method according to at least one of the preceding claims, **characterized in that** image distortion, brightness and/or color correction values are calculated for a first focus area (16), in particular a first sphere (K1), and a second focus area (16), in particular a second sphere (K2), and

   - during a display, switching each is effected between the first and the second focus area (16), depending on the distance at which selected objects are located, and/or
   - during a display, an interpolation each is effected between the values of the first and the second focus area (16) in order to achieve an optimum display of objects.

10. The image processing method according to at least one of the preceding claims, **characterized in that** the images of the camera cluster (10) corrected for image distortion, brightness and/or color values are

   - projected as a projection image onto the surface of a sphere (42) or a part of a sphere (42) or onto arbitrarily shaped surfaces delimiting a three-dimensional space, so that a seamless image of a part of the three-dimensional space (100) is obtained, and/or
   - mapped onto a CubeMap.

11. The image processing method according to at least one of the preceding claims, **characterized in that** the image distortion correction also assigns the distance between a viewing point and the focus area (16) as a depth value to the image points of the projection image, beside the image points of the images of the camera cluster (10).

12. The image processing method according to at least one of the preceding claims, **characterized in that** overlapping images of the camera cluster (10) are darkened in dependence on the camera image point coordinates by means of a weighting function in which at least the first derivative is continuous, so that quality losses in composite images are reduced, wherein the weighting function in particular has the form of

$$\omega\big((x,y)\big) = \frac{1}{2}\sqrt[2]{(\cos(\pi * x) + 1) * (\cos(\pi * y) + 1)}$$

13. An image processing means on a machine-readable medium or as a data set containing values for an image distortion correction, a brightness correction and/or a color correction for at least one focus area (16) with at least one predetermined spatial distance (D) to a camera cluster (10) calculated for the camera cluster (10) according to a method of claims 1 to 12.

14. An image processing means on a machine-readable medium or as a data set calculated for a camera cluster (10) comprising at least one camera device according to a method of claims 2 to 12, wherein at least one image of the camera cluster (10) can be converted into at least one projection image for at least one projection area (42), wherein the projection image can be assembled from corrected images of the at least one camera device (1, 2, 3, 4, 5).

15. An image processing device for generating images of a part of a three-dimensional space (100) by means of a camera cluster (10) which is positioned in the three-dimensional space, comprising at least two camera devices (1, 2, 3, 4, 5) with a camera image space belonging to the camera device and/or by means of a camera cluster (10) comprising at least one camera device (1, 2, 3, 4, 5) with a camera image space belonging to the camera device, which is movable along a spatially known path with a known amount of movement,
said image processing device comprising

- a means for calibrating the parameters (203) that describe the recording characteristics of the camera device (1, 2, 3, 4, 5), configured and adapted for recording calibration marks (21) arranged in the three-dimensional space (100) and an allocation of the calibration marks (21) in the three-dimensional space (100) to an at least one calibration image generated by the camera cluster (10), wherein the positions of the calibration marks (21) in a coordinate system relative to each other are known, and
- a calculation means for calculating values for an image distortion correction, a brightness correction and/or a color correction for at least one focus area (16) as a virtual area in the three-dimensional space, each with at least one predetermined spatial distance (D) to the camera cluster (10), by means of the at least one calibration image generated by the camera cluster (10), wherein each pixel in the images of the camera cluster (10) is assigned a point in the three-dimensional space (100) at a predetermined distance to the camera cluster on the at least one focus area, and the parameters (203) are the input data for a second calibration step (204) in which the entire camera cluster (10) is calibrated for the at least one spatial distance (D) or the spatial distances (D) of the camera cluster to the at least one focus area, wherein image distortion corrections are generated by using grids for each of the camera devices (1, 2, 3, 4, 5), wherein the grids are part of an image processing means (206, 207) and contain mappings between points of the respective camera image space and those of the at least one focus area (16), and
- wherein the at least one focus area (16) is a sphere with a radius (D) around the camera cluster (10) or an arbitrarily shaped focus area (16) with at least one predetermined spatial distance (D) to the camera cluster, which surrounds the camera cluster (10), in particular a hemispherical area (16), or the focus area (16) is located inside the camera cluster (10) with at least a predetermined spatial distance (D) to the camera cluster (10), when the camera devices (1, 2) are directed to the inside.

**Revendications**

1. Procédé de traitement d'images pour générer des images d'une partie d'un espace tridimensionnel (100) comportant un cluster de caméras (10) avec au moins deux dispositifs de caméra (1, 2, 3, 4, 5) avec un espace d'image de caméra associé au dispositif de caméra et/ou comportant un cluster de caméras (10) avec au moins un dispositif de caméra (1, 2, 3, 4, 5) avec un espace d'image de caméra associé au dispositif de caméra, qui est déplacé le long d'une trajectoire connue dans l'espace avec une grandeur de mouvement connue, dans lequel

a) le cluster de caméras (10) est positionné dans l'espace tridimensionnel (100) et

b) un étalonnage des paramètres (203) qui décrivent les caractéristiques de prise de vue du dispositif de caméra (1, 2, 3, 4, 5) est effectué par la prise de vue de repères d'étalonnage (21) agencés dans l'espace tridimensionnel (100) et une association des repères d'étalonnage (21) dans l'espace tridimensionnel (100) à au moins une prise de vue d'étalonnage générée par le cluster de caméras (10), les positions des repères d'étalonnage (21) dans un système de coordonnées étant connues les unes par rapport aux autres, et

c) ensuite, au moyen de la au moins une prise de vue d'étalonnage générée par le cluster de caméras (10), sont calculées des valeurs pour une correction de distorsion d'image, une correction de luminosité et/ou une correction de couleur pour au moins une surface focale (16) en tant que surface virtuelle dans l'espace tridimensionnel avec respectivement au moins une distance spatiale prédéterminée (D) par rapport au cluster de caméras (10),

d) en associant à chaque pixel dans les prises de vue du cluster de caméras (10) un point dans l'espace tridimensionnel (100) à une distance prédéterminée par rapport au cluster de caméras sur la au moins une surface focale (16), où

e) la au moins une surface focale tridimensionnelle (16) est une sphère avec un rayon (D) autour du cluster de caméras (10) ou une surface focale (16) de forme quelconque avec au moins une distance spatiale prédéterminée (D) par rapport au cluster de caméras, qui entoure le cluster de caméras (10), en particulier une surface hémisphérique (16), ou la au moins une surface focale (16) se trouve à l'intérieur du cluster de caméras (10) avec au moins une distance spatiale prédéterminée (D) par rapport au cluster de caméras (10), lorsque les dispositifs de caméra (1, 2) sont dirigés vers l'intérieur, et

f) les paramètres (203) sont les données d'entrée pour une deuxième étape d'étalonnage (204) dans laquelle l'ensemble du cluster de caméras (10) est étalonné sur la au moins une distance spatiale ou les distances spatiales (D) du cluster de caméras (10) par rapport à la au moins une surface focale, des corrections de distorsion d'image étant générées en utilisant des grilles pour chacun des dispositifs de caméra (1, 2, 3, 4, 5), les grilles faisant partie d'un moyen de traitement d'images (206, 207) et contenant des associations entre des points de l'espace d'image de caméra respectif et ceux de la au moins une surface focale (16), comme en particulier une association selon la caractéristique d).

2. Procédé de traitement d'images selon la revendication 1, **caractérisé en ce qu'**au moyen d'une règle de représentation, au moins une prise de vue du cluster de caméras (10) est transformée en au moins une image de projection pour au moins une surface de projection (42), l'image de projection étant assemblée à partir de prises de vue corrigées du dispositif de caméra (1, 2, 3, 4, 5).

3. Procédé de traitement d'images selon la revendication 2, **caractérisé en ce que** l'image de projection est délivrée par un dispositif de sortie (50) en temps réel ou sensiblement en temps réel par rapport au moment de la prise de vue par le cluster de caméras.

4. Procédé de traitement d'images selon la revendication 1 ou 2, **caractérisé en ce qu'**au moyen d'une règle de représentation, au moins une prise de vue du cluster de caméras (10) est transformée en une image globale à être stockée et traité ultérieurement, l'image globale étant assemblée à partir de prises de vue corrigées du dispositif de caméra (1, 2, 3, 4, 5).

5. Procédé de traitement d'images selon au moins l'une quelconque des revendications précédentes, **caractérisé en ce que**, en utilisant les valeurs de paramètres de correction de distorsion d'image, de luminosité et/ou de couleur obtenues, on produit une image globale homogène, sans soudure, sans décalage et sans image d'ombre, qui est stockée et/ou traitée ultérieurement, en particulier pour former une image de projection.

6. Procédé de traitement d'images selon au moins l'une quelconque des revendications précédentes, **caractérisé en ce que** la au moins une surface focale (16) est déterminée au moins en partie par un balayage laser, une mesure de distance en temps de vol, une reconnaissance basée sur l'image d'un objet identifiable, une reconnaissance de modèle optique stéréométrique et/ou par des mesures de distance de dispositifs de caméra adjacents qui se chevauchent.

7. Procédé de traitement d'images selon au moins l'une quelconque des revendications précédentes, **caractérisé en ce que** la règle de représentation et/ou l'image de projection est déterminée en temps réel ou sensiblement en temps réel, par rapport à l'instant de prise de vue des prises de vue à présenter du cluster de caméras.

8. Procédé de traitement d'images selon au moins l'une quelconque des revendications précédentes, **caractérisé en ce que** des repères d'étalonnage (21) sont projetés par un système laser (20), en particulier avec exactement un laser en mouvement, et/ou des repères d'étalonnage (21) sont des objets visibles dans l'espace tridimensionnel (100) et/ou des structures géométriques et/ou des LED et/ou des repères ultraviolets et/ou des repères infrarouges.

9. Procédé de traitement d'images selon au moins l'une quelconque des revendications précédentes, **caractérisé en ce que** des valeurs de correction de distorsion d'image, de luminosité et/ou de couleur sont calculées pour une première surface focale (16), en particulier une première sphère (K1), et une deuxième surface focale (16), en particulier une deuxième sphère (K2), et

- pendant une représentation, on commute respectivement entre la première et la deuxième surface focale (16), en fonction de la distance à laquelle se trouvent les objets sélectionnés, et/ou
- pendant une représentation, on procède à chaque fois à une interpolation entre les valeurs de la première et de la deuxième surface focale (16) afin d'obtenir une représentation optimale d'objets.

10. Procédé de traitement d'images selon au moins l'une quelconque des revendications précédentes, **caractérisé en ce que** les prises de vue du cluster de caméras (10) corrigées de la distorsion d'image, de la luminosité et/ou des valeurs de couleur

- sont projetées en tant qu'image de projection sur la surface d'une sphère (42) ou d'une partie d'une sphère (42) ou sur des surfaces de forme quelconque délimitant un espace tridimensionnel, de manière à obtenir une image sans soudure d'une partie de l'espace tridimensionnel (100), et/ou
- sont mappées sur une CubeMap.

11. Procédé de traitement d'images selon au moins l'une quelconque des revendications précédentes, **caractérisé en ce que** la correction de la distorsion d'image associe aux points d'image de l'image de projection, outre les points d'image des prises de vue du cluster de caméras (10), également la distance entre un point d'observation et la surface focale (16) en tant que valeur de profondeur.

12. Procédé de traitement d'images selon au moins l'une quelconque des revendications précédentes, **caractérisé en ce que** des prises de vue se chevauchant du cluster de caméras (10) sont assombries au moyen d'une fonction de pondération, dans laquelle au moins la dérivée première est continue, en dépendance des coordonnées de points d'image de la caméra, de sorte que des perturbations de qualité dans des images composites sont réduites, la fonction de pondération ayant en particulier la forme

$$\omega\big((x,y)\big) = \frac{1}{2}\sqrt[2]{(\cos(\pi * x) + 1) * (\cos(\pi * y) + 1)}$$

13. Moyen de traitement d'images sur un support lisible par machine ou comme ensemble de données contenant des valeurs pour une correction de distorsion d'image, une correction de luminosité et/ou une correction de couleur pour au moins une surface focale (16) avec au moins une distance spatiale prédéterminée (D) par rapport à un cluster de caméras (10) calculée pour le cluster de caméras (10) selon un procédé des revendications 1 à 12.

14. Moyen de traitement d'images sur un support lisible par machine ou comme ensemble de données calculé pour un cluster de caméras (10) comportant au moins un dispositif de caméra selon un procédé des revendications 2 à 12, dans lequel au moins une prise de vue du cluster de caméras (10) peut être transformée en au moins une image de projection pour au moins une surface de projection (42), l'image de projection pouvant être assemblée à partir de prises de vue corrigées de l'au moins un dispositif de caméra (1, 2, 3, 4, 5).

15. Dispositif de traitement d'images pour générer des images d'une partie d'un espace tridimensionnel (100) avec un cluster de caméras (10), qui est positionné dans l'espace tridimensionnel, comportant au moins deux dispositifs de caméra (1, 2, 3, 4, 5) avec un espace d'image de caméra associé au dispositif de caméra et/ou comportant un cluster de caméras (10) avec au moins un dispositif de caméra (1, 2, 3, 4, 5) avec un espace d'image de caméra associé au dispositif de caméra, qui peut être déplacé le long d'une trajectoire connue dans l'espace avec une grandeur de mouvement connue,
ledit dispositif de traitement d'images comportant

- un moyen pour étalonner les paramètres (203) qui décrivent les caractéristiques de prise de vue du dispositif de caméra (1, 2, 3, 4, 5), configuré et adapté pour l'enregistrement de repères d'étalonnage (21) disposés dans l'espace tridimensionnel (100) et une association des repères d'étalonnage (21) dans l'espace tridimensionnel (100) à au moins une prise de vue générée par le cluster de caméras (10), les positions des repères d'étalonnage (21) dans un système de coordonnées étant connues les unes par rapport aux autres, et
- un moyen de calcul pour le calcul de valeurs pour une correction de distorsion d'image, une correction de luminosité et/ou une correction de couleur pour au moins une surface focale (16) en tant que surface virtuelle dans l'espace tridimensionnel avec respectivement au moins une distance spatiale prédéterminée (D) par rapport au cluster de caméras (10) au moyen de la au moins une prise de vue d'étalonnage générée par le cluster de caméras (10), un point dans l'espace tridimensionnel (100) à une distance prédéterminée par rapport au cluster de caméras sur la au moins une surface focale étant associé à chaque pixel dans les prises de vue du cluster de caméras (10), et les paramètres (203) sont les données d'entrée pour une deuxième étape d'étalonnage (204) au cours de laquelle l'ensemble du cluster de caméras (10) est étalonné sur la au moins une distance spatiale (D) ou les distances spatiales (D) du cluster de caméras par rapport à la au moins une surface focale, dans lequel des corrections de distorsion d'image sont générées en utilisant des grilles pour chacun des dispositifs de caméra (1, 2, 3, 4, 5), les grilles faisant partie d'un moyen de traitement d'images (206, 207) et contenant des associations entre des points de l'espace d'image de caméra respectif et ceux de la au moins une surface focale (16), et
- la au moins une surface focale (16) étant une sphère avec un rayon (D) autour du cluster de caméras (10) ou une surface focale (16) de forme quelconque avec au moins une distance spatiale prédéterminée (D) par rapport au cluster de caméras, qui entoure le cluster de caméras (10), en particulier une surface hémisphérique (16), ou la surface focale (16) se trouve à l'intérieur du cluster de caméras (10) avec au moins une distance spatiale prédéterminée (D) par rapport au cluster de caméras (10), lorsque les dispositifs de caméra (1, 2) sont dirigés vers l'intérieur.

# FIG 1

# FIG 2A

FIG 2B

# FIG 3A

FIG 3B

# FIG 4

FIG 5

# FIG 6

FIG 7

Mesh von C2

Mesh von C1

D1

D2

16'

16

1

2

X

10

FIG 8

Fig. 9

Fig. 10

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20100067072 A1

- US 20120002057 A1

### In der Beschreibung aufgeführte Nicht-Patentliteratur

- CLIPS - Development of a Novel Camera and Laser-Based Indoor Positioning System. **S. TILCH.** Dissertation. ETH, 2012
- **TOMAS SVOBODA.** *A Software for Complete Calibration of Multicamera Systems,* 16. Februar 2016, http://cmp.felk.cvut.cz/~svoboda/Self-Cal/Publ/talk-print.pdf

- **TSAI.** An Efficient and Accurate Camera Calibration Technique for 3D Machine Vision. *Proceedings of IEEE Conference on Computer Vision and Pattern Recognition,* 1986, 364-374
- **R. TSAI.** An Efficient and Accurate Camera Calibration Technique for 3D Machine Vision. *Proceedings of IEEE Conference on Computer Vision and Pattern Recognition,* 1986, 364-374